(19) Europäisches Patentamt / European Patent Office / Office européen des brevets

(11) **EP 4 620 837 A1**

(12) **EUROPEAN PATENT APPLICATION**
published in accordance with Art. 153(4) EPC


(43) Date of publication:
**24.09.2025 Bulletin 2025/39**

(21) Application number: **22970035.6**

(22) Date of filing: **27.12.2022**

(51) International Patent Classification (IPC):
***B64U 10/16*** *(2023.01)* ***B64U 101/40*** *(2023.01)*

(52) Cooperative Patent Classification (CPC):
**B64U 10/16;** B64U 2101/40

(86) International application number:
**PCT/JP2022/048184**

(87) International publication number:
**WO 2024/142241 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Kubota Corporation**
**Osaka 556-8601 (JP)**

(72) Inventors:
- **SEINO, Kohei**
  **Sakai-shi, Osaka 590-0908 (JP)**
- **ISHIKAWA, Mitsuru**
  **Ota-shi, Gunma 379-2304 (JP)**
- **NAGASHIMA, Hiroyuki**
  **Ota-shi, Gunma 379-2304 (JP)**

(74) Representative: **Cabinet Beau de Loménie**
**103, rue de Grenelle / CS 90800**
**75340 Paris Cedex 07 (FR)**


(54) **UNMANNED AERIAL VEHICLE, AND CONTROL SYSTEM AND CONTROL METHOD FOR UNMANNED AERIAL VEHICLE**


(57) An unmanned aerial vehicle includes: a plurality of rotors including a plurality of first rotors and at least one second rotor; and a control device to perform attitude control of the body of the vehicle by controlling rotation of the plurality of first rotors, and generate a main thrust by controlling rotation of the at least one second rotor. The control device calculates a first thrust that is a total thrust to be generated by the plurality of first rotors, and calculates a second thrust that is a total thrust to be generated by the at least one second rotor, based on the first thrust and the total thrust needed for flight; determines a rotational speed of each of the plurality of first rotors based on the first thrust; and determines a rotational speed of the at least one second rotor based on the second thrust.


*FIG. 6*

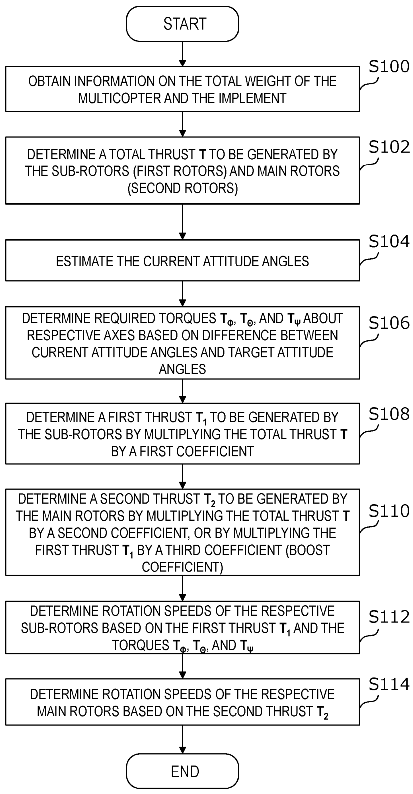


EP 4 620 837 A1

## Description

### TECHNICAL FIELD

The present disclosure relates to unmanned aerial vehicles, and control systems and control methods for unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle including multiple rotary wings (Multi-Rotor UAV) is also called a "drone", "multirotor", or "multicopter", and is widely used for applications including aerial photography, surveying, logistics, and agricultural spraying.
Patent Document No. 1 describes an unmanned aerial vehicle (unmanned flying body) that changes its flight position in coordination with the operation of an agricultural machine.
Patent Document No. 2 describes an unmanned aerial vehicle (autonomous flight apparatus) that can increase payload and continuous flight time, and can accurately adjust position and attitude during flight.

### CITATION LIST

#### PATENT LITERATURE

Patent Document No. 1: Japanese Patent Application Publication No. 2022-104737
Patent Document No. 2: Japanese Patent Application Publication No. 2019-59362

### SUMMARY OF INVENTION

#### TECHNICAL PROBLEM

The maximum payload capacity (payload) and flight duration of unmanned aerial vehicles may be insufficient depending on the application, and further improvements are desired.
The present disclosure provides unmanned aerial vehicles suitable for agricultural applications, capable of increasing payload and/or flight duration.

#### SOLUTION TO PROBLEM

The present disclosure provides solutions described in the following items.
[Item A1] An unmanned aerial vehicle comprising:

a plurality of first rotors;
a plurality of second rotors;
a control device to perform attitude control by controlling rotation of the plurality of first rotors, and generate a main thrust by controlling rotation of the plurality of second rotors, wherein
the control device reduces a total thrust of the plurality of second rotors when performing rudder control to adjust a yaw angle of a body of the vehicle by controlling the rotation of the plurality of first rotors.

[Item A2] The unmanned aerial vehicle according to Item A1, wherein the control device reduces the total thrust of the plurality of second rotors by decreasing a rotational speed of each of the plurality of second rotors.
[Item A3] The unmanned aerial vehicle according to Item A1 or A2, wherein the control device performs the rudder control when controlling the yaw angle to a target angle, when a control delay in the yaw angle occurs, or when rotation or oscillation in the yaw direction occurs.
[Item A4] The unmanned aerial vehicle according to any one of Items A1 to A3, wherein a diameter of each of the plurality of second rotors is larger than a diameter of each of the plurality of first rotors.
[Item A5] The unmanned aerial vehicle according to any one of Items A1 to A4, wherein a thrust per revolution of each of the plurality of second rotors is greater than a thrust per revolution of each of the plurality of first rotors.

[Item A6] The unmanned aerial vehicle according to any one of Items A1 to A5, wherein a distance from a center of the body to a rotation axis of each of the plurality of second rotors is shorter than a distance from the center of the body to a rotation axis of each of the plurality of first rotors.

[Item A7] The unmanned aerial vehicle according to any one of Items A1 to A6, wherein the control device makes the total thrust of the plurality of second rotors greater than a total thrust of the plurality of first rotors during hovering, and makes the total thrust of the plurality of second rotors less than the total thrust of the plurality of first rotors when performing the rudder control.

[Item A8] The unmanned aerial vehicle according to any one of Items A1 to A7, wherein the control device decreases a rotational speed of each of the plurality of second rotors to reduce the total thrust of the plurality of second rotors by 5% or more when performing the rudder control.

[Item A9] The unmanned aerial vehicle according to Item A8, wherein the control device compensates for the decreased total thrust of the plurality of second rotors due to the decreased rotational speed of each of the plurality of second rotors by increasing the rotational speed of the plurality of first rotors when performing the rudder control.

[Item A10] The unmanned aerial vehicle according to any one of Items A1 to A9, wherein the control device stops the rotation of each of the plurality of second rotors when performing the rudder control.

[Item A11] The unmanned aerial vehicle according to any one of Items A1 to A10, further comprising:

a plurality of electric motors, each configured to drive a respective one of the plurality of first rotors; and
an internal combustion engine to drive the plurality of second rotors, wherein
the control device controls the rotation of the plurality of first rotors by controlling the plurality of electric motors, and controls the rotation of the plurality of second rotors by controlling the internal combustion engine.

[Item A12] A control method for an unmanned aerial vehicle comprising a plurality of first rotors and a plurality of second rotors, the control method comprising:

performing attitude control of a body of the vehicle by controlling rotation of the plurality of first rotors;
generating a main thrust by controlling rotation of the plurality of second rotors, wherein
performing the attitude control includes:

executing rudder control to adjust a yaw angle of the body by controlling rotation of the plurality of first rotors; and
reducing a total thrust of the plurality of second rotors when executing the rudder control.

[Item B1] An unmanned aerial vehicle comprising:

a plurality of rotors including a plurality of first rotors and at least one second rotor; and
a control device to perform attitude control of a body of the vehicle by controlling rotation of the plurality of first rotors, and generate a main thrust by controlling rotation of the at least one second rotor, wherein
the control device:

calculates a first thrust that is a total thrust to be generated by the plurality of first rotors, and calculates a second thrust that is a total thrust to be generated by the at least one second rotor, based on the first thrust and a total thrust needed for flight;
determines a rotational speed of each of the plurality of first rotors based on the first thrust; and
determines a rotational speed of the at least one second rotor based on the second thrust.

[Item B2] The unmanned aerial vehicle according to Item B1, wherein the control device calculates the second thrust by subtracting the first thrust from the total thrust needed for flight.

[Item B3] The unmanned aerial vehicle according to Item B1, wherein the control device:

determines the first thrust by multiplying the total thrust needed for flight by a first coefficient ranging from 0 to 1 inclusive; and
determines the second thrust by multiplying the total thrust by a second coefficient that is obtained by subtracting the first coefficient from 1, or by multiplying the first thrust by a third coefficient that is obtained by dividing the second coefficient by the first coefficient.

[Item B4] The unmanned aerial vehicle according to Item B3, wherein the control device changes the first coefficient, and the second coefficient or the third coefficient, according to a state of the unmanned aerial vehicle.

[Item B5] The unmanned aerial vehicle according to Item B3 or B4, wherein the control device sets the first coefficient to a value less than 0.5 during hovering.

[Item B6] The unmanned aerial vehicle according to any one of Items B3 to B5, wherein the control device determines the second thrust by multiplying the first thrust by the third coefficient.

[Item B7] The unmanned aerial vehicle according to any one of Items B3 to B6, wherein the control device changes the first coefficient, and the second coefficient or the third coefficient, according to the flight mode.

[Item B8] The unmanned aerial vehicle according to any one of Items B3 to B7, wherein the control device changes the first coefficient, and the second coefficient or the third coefficient, in response to user operation.

[Item B9] The unmanned aerial vehicle according to any one of Items B1 to B8, wherein a diameter of the at least one second rotor is larger than a diameter of each of the plurality of first rotors.

[Item B10] The unmanned aerial vehicle according to any one of Items B1 to B9, wherein a thrust per revolution of each of the plurality of second rotors is greater than a thrust per revolution of each of the plurality of first rotors.

[Item B11] The unmanned aerial vehicle according to any one of Items B1 to B10, wherein a distance from a center of the body to a rotation axis of each of the plurality of second rotors is shorter than a distance from the center of the body to a rotation axis of each of the plurality of first rotors.

[Item B12] The unmanned aerial vehicle according to any one of Items B1 to B11, further comprising:

a plurality of electric motors, each configured to drive a respective one of the plurality of first rotors; and
an internal combustion engine to drive the at least one second rotor, wherein
the control device controls rotation of the plurality of first rotors by controlling the plurality of electric motors, and controls rotation of the at least one second rotor by controlling the internal combustion engine.

[Item B13] A control method performed by a control device in an unmanned aerial vehicle including a plurality of rotors including a plurality of first rotors and at least one second rotor, and the control device to perform attitude control of a body of the vehicle by controlling rotation of the plurality of first rotors, and generate a main thrust by controlling rotation of the at least one second rotor, the control method comprising:

calculating a first thrust to be generated by the plurality of first rotors;
calculating a second thrust to be generated by the at least one second rotor based on the first thrust and a total thrust needed for flight;
determining a rotational speed of each of the plurality of first rotors based on the first thrust; and
determining a rotational speed of the at least one second rotor based on the second thrust.

[Item C1] An unmanned aerial vehicle comprising:

a plurality of electric motors;
an internal combustion engine;
a plurality of first rotors, each driven by corresponding one of the plurality of electric motors;
at least one second rotor driven by the internal combustion engine; and
a control device, wherein
the control device:

determines a first rotational speed for each of the plurality of first rotors and a second rotational speed for the at least one second rotor;
generates a first control signal to rotate each of the plurality of electric motors based on the first rotational speed for each of the plurality of first rotors; and
generates a second control signal to drive the internal combustion engine based on the second rotational speed.

[Item C2] The unmanned aerial vehicle according to Item C1, wherein the control device generates the second control signal based on a table for converting the second rotational speed into a rotational speed of the internal combustion engine.

[Item C3] The unmanned aerial vehicle according to Item C1 or C2, wherein the control device performs attitude control of a body of the vehicle by controlling rotation of the plurality of first rotors through controlling the plurality of electric motors, and generates a main thrust by controlling rotation of the at least one second rotor through controlling the internal combustion engine.

[Item C4] The unmanned aerial vehicle according to any one of Items C1 to C3, wherein the control device:

generates a first PWM (Pulse Width Modulation) signal with a duty ratio corresponding to the first rotational speed as the first control signal; and

generates a second PWM signal with a duty ratio corresponding to the second rotational speed of the at least one second rotor, and converts the second PWM signal into the second control signal that determines a rotational speed of the internal combustion engine.

[Item C5] The unmanned aerial vehicle according to Item C4, wherein the control signal:

reads data from a storage device that represents the relationship between the duty ratio of the second PWM signal and the number of revolutions per unit time of the internal combustion engine;
determines the number of revolutions based on the data and the second PWM signal; and
generates the second control signal based on the number of revolutions.

[Item C6] The unmanned aerial vehicle according to Item C4, wherein

the second control signal determines an opening degree of a throttle valve of the internal combustion engine, and
the control device reads data from a storage device that represents a relationship between the duty ratio of the second PWM signal and an opening degree of the throttle valve, and converts the second PWM signal into the second control signal based on the data.

[Item C7] The unmanned aerial vehicle according to any one of Items C4 to C6, wherein the control device:

determines a first thrust that is a total thrust to be generated by the plurality of first rotors, and a second thrust that is a total thrust to be generated by the at least one second rotor;
generates the first control signal for each of the plurality of first rotors based on the first thrust; and
determines the second PWM signal based on the first control signal and the ratio of the second thrust to the first thrust.

[Item C8] The unmanned aerial vehicle according to any one of Items C1 to C7, wherein a diameter of the at least one second rotor is larger than a diameter of each of the plurality of first rotors.

[Item C9] The unmanned aerial vehicle according to any one of Items C1 to C8, wherein a thrust per revolution of each of the plurality of second rotors is greater than a thrust per revolution of each of the plurality of first rotors.

[Item C10] The unmanned aerial vehicle according to any one of Items C1 to C9, wherein a distance from a center of a body of the vehicle to a rotation axis of each of the plurality of second rotors is shorter than a distance from a center of the body to a rotation axis of each of the plurality of first rotors.

[Item C11] A control method performed by a control device in an unmanned aerial vehicle that including a plurality of electric motors, an internal combustion engine, a plurality of first rotors each driven by one of the plurality of electric motors, at least one second rotor driven by the internal combustion engine, and the control device, the control method comprising:

determining a first rotational speed for each of the plurality of first rotors and a second rotational speed for the at least one second rotor;
generating a first control signal to rotate each of the plurality of electric motors based on the first rotational speed; and
generating a second control signal to drive the internal combustion engine based on the second rotational speed.

## ADVANTAGEOUS EFFECTS OF INVENTION

According to embodiments of unmanned aerial vehicles, control systems and control methods of the present disclosure, it is possible to provide unmanned aerial vehicles that is suitable for agricultural applications, capable of increasing payload and/or flight duration.

## BRIEF DESCRIPTION OF DRAWINGS

FIG. **1A** is a block diagram schematically showing several examples of rotation drive devices for rotating rotors in an unmanned aerial vehicle including a plurality of rotors.
FIG. **1B** is a plan view schematically showing one example of a basic configuration of an unmanned aerial vehicle including a plurality of rotors.
FIG. **1C** is a side view schematically showing one example of a basic configuration of an unmanned aerial vehicle including a plurality of rotors.

FIG. **1D** is a plan view schematically showing another example of a basic configuration of an unmanned aerial vehicle including a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3A** is a top view schematically showing a multicopter according to an example embodiment.
FIG. **3B** is a side view schematically showing a multicopter according to the example embodiment.
FIG. **4** is a block diagram showing an example of system configuration in a multicopter of an example embodiment.
FIG. **5** is a plan view schematically showing a parallel hybrid drive type multicopter.
FIG. **6** is a flowchart showing an example of processing to determine the rotational speed of each sub-rotor and each main rotor.
FIG. **7** is a flowchart showing an outline of the operation of the control device related to rudder control.
FIG. **8** is a flowchart showing an example of a control method for electric motors and internal combustion engine.
FIG. **9** is a block diagram showing an example configuration of a flight controller.
FIG. **10** is a diagram showing an example configuration of a module for generating PWM signals for main rotors.
FIG. **11** is a graph showing an example of time variation of duty sum value of PWM signals for sub-rotors and duty value of PWM signal for main rotors.
FIG. **12** is a diagram showing an example configuration of a main rotor control unit.
FIG. **13** is a graph showing an example of the relationship between PWM signal duty ratio and engine rotation speed.
FIG. **14** is a block diagram showing an example of hardware configuration of the control device.
FIG. **15** is a diagram schematically showing an example of a communication network to which the multicopter is connected.

## DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

FIG. **1B** is a plan view schematically showing a basic configuration example of multicopter **10.** In the configuration example of FIG. **1B,** a rotation drive device **3** includes the first rotation drive device **3A** shown in FIG. **1A.** That is, in this example, rotation drive device **3** (**3A**) includes motors **14** and a battery **52.** FIG. **1C** is a side view schematically showing the multicopter **10.**

A multicopter **10** shown in Figs. **1B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11**".

In the example of FIG. **1B,** the multicopter **10** is a quad-type multicopter (quadcopter) including four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per revolution may be called "main rotors" and the rotors **2** that generate relatively small thrust per revolution may be called "sub-rotors". In one example, main rotors may be positioned further inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** including the second rotation drive device **3B.** In the example shown in FIG. **1D,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter includes an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be include mechanisms such as robotic hands. In that case, a single implement **200** can perform various ground operations. When the implement **200** includes space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C,** the multicopter **10** includes power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

FIG. **2A** shows a block diagram of a basic configuration example of a battery-driven multicopter **10.** The battery-driven multicopter **10** includes a plurality of rotors **12,** a plurality of motors **14,** each configured to drive a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A,** for simplicity, the rotor **12,** the motor **14,** and the ESC **16** are each shown by a single block, but the numbers of rotors **12,** motors **14,** and ESCs **16** are each plural. This also applies to Figs. **2B** and **2C.** The ESC **16** may be included in the control device **4a.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each configured to drive a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

The following describes configuration examples and operation examples of an unmanned aerial vehicle according to embodiments of the present disclosure, taking a parallel hybrid drive multicopter as an example.

<Basic Configuration>

FIG. **3A** is a top view schematically showing a multicopter **100** according to the present embodiment, and FIG. **3B** is a side view thereof. In FIG. **3B,** an implement **200** connected to the multicopter **100** is shown. The multicopter **100** may be connected with cargo, agricultural materials, other machinery, or containers, cases, or packages capable of accommodating them, together with or in place of the implement **200.** Hereinafter, the weight of the implement **200** and the implement itself may be referred to as "payload". The "coupling" between the multicopter **100** and the implement **200** or the like may be made by various devices or apparatuses.

The multicopter **100** shown in FIG. **3A** includes eight sub-rotors **12** and two main rotors **22.** The sub-rotors **12** include four sets of propellers **12a** and **12b** that rotate in opposite directions on the same axis. Each of propellers **12a** and **12b** includes two blades. The propellers **12a, 12b** are each rotated by motors **14.** The four sets of propellers **12a** and **12b** rotating in opposite directions on the same axis are located at vertices of a quadrilateral. The main rotors **22** include two propellers **22a** rotating in opposite directions at different positions. Each propeller **22a** includes four blades. The eight propellers **12a, 12b** of sub-rotor **12** have the same pitch angle and diameter. The two propellers **22a** of main rotor **22** also have the same pitch angle and diameter. The diameter of propeller **22a** is 1.2 times or more, for example, 1.4 times or more and 2.0 times or less, than the diameter of propellers **12a** and **12b.**

The multicopter **100** includes a body frame **110** including four arms **110A** for the sub-rotors **12** and two arms **110B** for the main rotors **22.** The body frame **110** supports a main body **120** containing various electronic components and mechanical components described later.

In the example of FIG. **3B,** the main body **120** includes a power supply **76** and an actuator **78** used for connecting to the implement **200** and other purposes. The power supply **76** is a device that supplies power generated within the main body **120** to the implement **200.** The actuator **78** is a device such as an electric motor that performs operations for connecting the implement **200** to the main body **120** of the multicopter **100.** In the example of FIG. **3B,** the actuator 78 drives a mechanism for winding up a cable connecting the main body **120** and the implement **200.** This cable may include a power line for supplying power to the implement **200** from the multicopter **100,** and a communication line for communication between the multicopter **100** and the implement **200.**

<System Configuration>

FIG. **4** is a block diagram showing an example of the system configuration of the multicopter **100** according to the present embodiment.

In the illustrated example, the main body **120** of the multicopter **100** includes a control device **30** containing a flight controller 32, sensors **72,** and a communication device **74.** These are basically similar to the control device **4a,** sensors **4b,** and communication device **4c** included in the main body 4 of the multicopter **10** explained with reference to FIG. **1A.**

The multicopter **100** according to the present embodiment includes eight sub-rotors **12,** eight motors **14** that respectively rotate the eight sub-rotors **12,** and eight ESCs that respectively control the eight motors **14.** Each ESC **16** receives a motor control signal for controlling the motor **14** from the control device **30** via wiring **82.** The motor control signal is, for example, a PWM (Pulse Width Modulation) signal. When the motor control signal is a PWM signal, the duty cycle of the PWM signal may indicate an analog value of the motor rotation speed. Each ESC **16** controls the rotation speed of the motor **14** connected to that ESC **16** based on the motor control signal from the control device **30.** In FIG. **4,** for simplicity, one set of "sub-rotor **12,** motor **14** and ESC **16"** is shown, but the multicopter **100** according to the present embodiment includes eight sets of "sub-rotor **12,** motor **14** and ESC **16".** The number of these sets is not limited to eight.

The control device **30** is connected to individual ESCs **16** via electrically independent wiring **82** and may individually control each of the eight ESCs **16.** As mentioned earlier, the sub-rotor **12** is used not only for generating lift but also for attitude control. Attitude control is achieved by the flight controller **32** of the control device **30** obtaining measured or estimated values indicating the attitude of the main body **120** from the sensors **72** to determine the current attitude of the main body **120,** and controlling the rotation speed of individual motors **14** according to the difference from the target attitude.

The main body **120** includes a main rotor driver **24** that drives the main rotor **22** and a main rotor control unit **26** that controls the main rotor driver **24.** In this embodiment, the main rotor driver **24** is an internal combustion engine. Therefore, the main rotor control unit **26** includes an Engine Control Unit (ECU). The main rotor control unit **26** is configured to execute control of the internal combustion engine by acquiring sensor data such as throttle opening, intake temperature, engine speed, and temperature of various portions of the main rotor driver **24,** which is an internal combustion engine. The main rotor control unit **26** is connected to the control device **30** via wiring **82** such as a CAN (Controller Area Network) bus. The main rotor control unit **26** is configured to output engine control signals based on signals transmitted from the control device **30.** The engine control signal includes, for example, throttle opening. A digital-to-analog converter (DAC) and/or voltage converter may be connected between the control device **30** and the main rotor control unit **26.** Mechanical devices such as a clutch and reduction gear may be provided between the main rotor driver **24** and the main rotor **22.**

The main rotor driver **24** preferably is an internal combustion engine with minimal vibration. In this embodiment, the main rotor driver **24** is, for example, an opposed piston engine. The opposed piston engine is disclosed in, for example, Japanese Patent No. 5508604. The entire contents of Japanese Patent No. 5508604 are hereby incorporated by reference.

The main rotor driver **24,** which is an internal combustion engine, may drive an electric generator **42** such as an alternator to generate power. In this embodiment, the electric generator **42** has the structure of an AC synchronous motor including a rotor and a stator. Therefore, the electric generator **42** may also function as a "starter" by rotating the rotor through energization during startup of the main rotor driver **24.** The electric generator **42** rectifies the alternating current generated by power generation to convert it to direct current. The electric generator **42** generates direct current power required for driving the motor **14** and supplies it to each ESC **16** via wiring **80.** The electric generator **42** is configured to output, for example, a direct current voltage of 250V or higher. Note that the wiring **80** is power wiring, and the wiring **82** is signal wiring. Each of wirings **80** and **82** includes a plurality of conductors.

The electric generator **42** is connected to a power management device **44.** The power management device **44** is connected to the control device **30** and a battery management device **54** to be described later. The power management device **44** may control the amount of power generation by the electric generator **42** based on signals from the control device **30** or the battery management device **54.** This amount of power generation may be variably controlled by the power management device **44** according to the power required by the motor **14** and battery **52,** even when the engine speed of the main rotor driver **24,** which is an internal combustion engine, is in a constant state.

The main body **120** further includes a battery **52** including a plurality of cells of, for example, lithium-ion secondary batteries connected in series or parallel, and a battery management device **54** that controls charging and discharging of the battery **52.**

The battery **52** may receive direct current power from the electric generator **42** via a power switch **56** and be charged by that power. The operation of the power switch **56** may be controlled by the battery management device **54** and the control device **30.** The battery management device **54** is a device that measures or estimates parameter values defining the state of battery **52,** such as current flowing through battery **52,** cell voltage, cell balance, State Of Charge (SOC), State Of Health (SOH), and temperature.

The battery management device **54** may control the power switch **56** according to the state of the battery **52.** For example, when the battery **52** is in a state requiring charging, the battery management device **54** electrically connects the electric generator **42** and battery **52** by means of the power switch **56,** and supplies power from the electric generator **42** to the battery **52** to execute charging operation. At this time, the battery management device **54** may control the power management device **44** and increase the amount of power generation by the electric generator **42** so that the power supplied to ESC **16** does not fall below a desired level. In contrast, when the battery **52** is in a state not requiring charging, the battery management device **54** disconnects the electrical connection between the electric generator **42** and battery **52** by the power switch **56,** thereby stopping the charging of the battery **52.**

In this embodiment, the battery **52** has a power storage capacity that allows, even when power generation by the electric generator **42** stops for some reason and lift from the main rotor **22** is lost, continued generation of lift and attitude control by the sub-rotor **12** to fly to a location where landing is possible and land there. In other words, when the multicopter **100** according to this embodiment is flying normally, the power required to drive the sub-rotor **12** can be supplied to ESC **16** from the electric generator **42** rather than from the battery **52.** Therefore, even when increasing payload and flight duration, there is little need to increase the power storage capacity of battery **52** accordingly.

The power stored in battery **52** may be output as, for example, a direct current voltage of 250V or higher. However, this direct current voltage decreases with decreasing state of charge. Therefore, when the state of charge falls below a predetermined level, the battery management device **54** operates to supply part of the direct current power from the electric generator **42** to battery **52** to charge battery **52.**

The battery **52** is connected to a power circuit board **60.** The power circuit board **60** has the function of stepping down the voltage output from battery **52** to, for example, 24V, 12V, and 5V. The direct current voltage output from battery **52** is converted to a desired voltage by the power circuit board **60** before being supplied to other electronic components. In the example of FIG. **4,** power stepped down by the power circuit board **60** is supplied to the control device **30** and actuator **78** via wiring **80.**

In the example of FIG. **4,** the power supply **76** is electrically connected to the electric generator **42** or battery **52** via the power switch **56.** The power supply **76** in this example is configured to supply power generated within the main body **120** to external machines or devices such as the implement **200.**

The main body **120** may have configurations not shown in FIG. **4.** For example, the main body **120** may include a fuel tank for storing fuel required for operation of the main rotor driver **24,** water-cooled or air-cooled devices for cooling the main rotor driver **24,** and electrical equipment such as lighting devices and electric pumps. The electrical equipment may operate on power stepped down to a predetermined voltage by the power circuit board 60. Additionally, a battery (auxiliary battery) for electrical equipment may be provided and configured to supply power to the electrical equipment. Such an auxiliary battery may be charged from the battery **52** or the electric generator **42.**

In this embodiment, the motor **14** functions as a plurality of "attitude control devices" that respectively drive a plurality of first rotors (sub-rotors) **12.** Additionally, the main rotor driver **24,** which is an internal combustion engine, functions as a "main thrust generating device" that drives the second rotor (main rotor) **22.**

In the example shown in FIG. **4,** the control device **30** and the main rotor control unit **26** are separate components, but a single control device (computer or ECU) may have the functions of the control device **30** and the main rotor control unit **26.**

In this embodiment, the control device **30** can vary the ratio (thrust ratio) between the total thrust from the sub-rotors **12** obtained from the plurality of motors **14** (first thrust) and the total thrust from the main rotors **22** obtained from the main rotor driver **24** (second thrust). This point will be explained in detail below.

Generally, the responsiveness of motor **14** is superior to that of internal combustion engines. Regarding the torque required for rotation of rotors **12** and **22,** when the time from the input of a torque command signal to the achievement of the torque target value is called the "response time", the response time of motors is, for example, about 1/100 of that of internal combustion engines. Therefore, to control the attitude of the multicopter **100,** it is desirable to detect the difference between the current value and target value of the attitude angle of the multicopter **100,** and control the rotation speed of each of the plurality of sub-rotors **12** with high response speed to reduce this difference. An increase in rotor rotation speed generates an increase in thrust. By adjusting the thrust of each of the plurality of sub-rotors **12,** it is possible to control the attitude of the multicopter **100** with high precision and quickly.

In contrast, internal combustion engines efficiently generate large thrust. While the rotation of sub-rotor **12** is performed using power generated by the power of the main rotor driver **24,** which is an internal combustion engine, energy loss occurs when converting mechanical energy to electrical energy. Therefore, from the viewpoint of improving energy consumption efficiency, it is preferable that the main rotor driver **24** be used for main thrust generation by rotating the main rotor **22.** Additionally, to increase the thrust of main rotor **22,** it is preferable that the diameter of each main rotor **22** be larger than the diameter of each of the plurality of sub-rotors **12.**

However, when the main rotor **22** for main thrust generation is generating large thrust, that large thrust and rotational moment may, conversely, inhibit the attitude control function of the sub-rotors **12.** As a result, even when using the plurality of motors **14** with superior responsiveness to rotate the plurality of sub-rotors **12,** delays in attitude control response may occur. In contrast, while lowering the rotation speed of the main rotor **22** improves attitude control performance, energy consumption efficiency decreases.

In battery-powered multicopters, various algorithms are used to adjust the torque of each of the plurality of motors to balance the thrust of each rotor and control to a desired attitude. When performing attitude control with the plurality of motors in such case, adding a rotor rotated by an internal combustion engine may complicate the calculations needed for attitude control. To avoid such complications, it is effective to fix the "ratio" between the drive power output from the plurality of motors and the drive power output from the internal combustion engine. Therefore, in conventional parallel hybrid types, a control method that fixes this ratio has been adopted.

However, as a result of studies by the present inventors, it was discovered that when using the multicopter **100** for agricultural work, for example, it is preferable to make the above "ratio" variable rather than fixed, compared to when flying the multicopter **100** for simple logistics or surveillance purposes. This is because when flying for agricultural purposes, the multicopter **100** operates under various different conditions, such as various agricultural work (ground work) within fields, movement between a plurality of fields, and transport of agricultural materials or harvested crops, and due to these conditions, the required response speed level for attitude control changes significantly. Additionally, when connecting implements with diverse weights and shapes selected according to the content of agricultural work, the required lift and precision of attitude control may also change significantly.

In this embodiment, when precise attitude control is not required, for example, when there are few disturbances such as wind, the payload is small, or when only moving without performing work with the implement, the thrust of the main rotor **22** can be increased, and instead, the thrust of the sub-rotors **12** can be reduced.

On the other hand, when precise attitude control is required, for example, when performing ground work while flying with an implement connected, or when a more responsive change in attitude of the main body is required than in normal flight, it is preferable to reduce the thrust of the main rotor **22** (or eliminate it) and instead increase the thrust of the sub-rotors **12.** While such a reduction in main rotor thrust may lead to a decrease in overall energy consumption efficiency, it enables an improvement in attitude control performance (response performance).

<Determination of Main Rotor and Sub-rotor Rotational Speeds>

Next, an example method for determining the rotational speeds of each main rotor **22** and each sub-rotor **12** will be explained.

FIG. **5** is a plan view schematically showing a parallel hybrid drive type multicopter **100.** FIG. **5** shows an xyz coordinate system defined by mutually orthogonal x-axis, y-axis, and z-axis. This coordinate system is fixed to the aircraft body, and its origin is located at the center (e.g., center of gravity) of the body. The x-axis extends in the forward direction of the aircraft and is also called the "roll axis". The y-axis extends in the leftward direction of the aircraft and is also called the "pitch axis". The z-axis extends in the upward direction of the aircraft and is also called the "yaw axis".

The multicopter **100** shown in FIG. **5** includes two main rotors **22** and eight sub-rotors **12.** The two main rotors **22** are supported by two arms **110B1, 110B2** extending along the x-axis. The two main rotors **22** are controlled to rotate in opposite directions to each other. The eight sub-rotors **12** are configured as four pairs of sub-rotors **12,** with each pair consisting of two coaxial sub-rotors **12.** The four pairs of sub-rotors **12** are supported by four arms **110A1, 110A2, 110A3, 110A4** that make 45-degree angles with the x-axis and y-axis. The two sub-rotors **12** in each pair are controlled to rotate in opposite directions to each other. The distance from the center of the aircraft to the rotation axis of each main rotor **22** is shorter than the distance from the center of the aircraft to the rotation axis of each sub-rotor **12.** The diameter of each main rotor **22** is larger than the diameter of each sub-rotor **12.** In FIG. **5,** each main rotor **22** is represented by a relatively large circle, and each pair of two coaxial sub-rotors **12** is represented by a relatively small circle. Let the magnitudes of the rotational speeds of the four sub-rotors **12** positioned on the upper side (z-axis positive direction) be $\omega_1$, $\omega_2$, $\omega_3$, $\omega_4$, and let the magnitudes of the rotational speeds of the four sub-rotors **12** positioned on the lower side (z-axis negative direction) be $\omega_5$, $\omega_6$, $\omega_7$, $\omega_8$. Also, let the magnitudes of the rotational speeds of the two main rotors **22** be $\omega_{m1}$, $\omega_{m2}$. Here, "rotational speed" refers to the number of revolutions per unit time (e.g., unit: rpm) or angular velocity (e.g., unit: rad/s).

Of the two sub-rotors **12** supported by the upper right arm **110A1** in FIG. **5,** the sub-rotor **12** on the z-axis positive direction (upper side) rotates clockwise at rotational speed $\omega_1$, and the sub-rotor **12** on the z-axis negative direction (lower side) rotates counterclockwise at rotational speed $\omega_5$. Of the two sub-rotors **12** supported by the lower right arm **110A2,** the sub-rotor **12** on the z-axis positive direction rotates counterclockwise at rotational speed $\omega_2$, and the sub-rotor **12** on the z-axis negative direction rotates clockwise at rotational speed $\omega_6$. Of the two sub-rotors **12** supported by the lower left arm **110A3,** the sub-rotor **12** on the z-axis positive direction rotates clockwise at rotational speed $\omega_3$, and the sub-rotor **12** on the z-axis negative direction rotates counterclockwise at rotational speed $\omega_7$. Of the two sub-rotors **12** supported by the upper left arm **110A4,** the sub-rotor **12** on the z-axis positive direction rotates counterclockwise at rotational speed $\omega_4$, and the sub-rotor **12** on the z-axis negative direction rotates clockwise at rotational speed $\omega_8$. The main rotor **22** supported by arm **110B1** extending from the center of the aircraft in the positive x-axis direction rotates clockwise at rotational speed $\omega_{m1}$. The main rotor **22** supported by arm **110B2** extending from the center of the aircraft in the negative x-axis direction rotates counterclockwise at rotational speed $\omega_{m2}$.

Let the length of each of the four arms **110A1, 110A2, 110A3, 110A4** supporting the sub-rotors **12** be l, and the length of each of the two arms **110B1, 110B2** supporting the main rotors **22** be $l_m$. Also, let the total thrust generated by the rotation of the multiple main rotors **22** and multiple sub-rotors **12** be T, the torque for rotation around the x-axis be $\tau_\varphi$, the torque for rotation around the y-axis be $\tau_\theta$, and the torque for rotation around the z-axis be $\tau_\psi$.

The relationship between the total thrust T and torques $\tau_\varphi$, $\tau_\theta$, $\tau_\psi$, and the rotational speeds of the sub-rotors **12** $\omega_1$, $\omega_2$, $\omega_3$, $\omega_4$, $\omega_5$, $\omega_6$, $\omega_7$, $\omega_8$ and the rotational speeds of the main rotors **22** $\omega_{m1}$, $\omega_{m2}$ is expressed by the following Equation 1.

[Equation 1]

$$\begin{bmatrix} T \\ \tau_\phi \\ \tau_\theta \\ \tau_\psi \end{bmatrix} = \begin{bmatrix} k_m & k_m & k & k & k & k & k & k & k & k \\ 0 & 0 & -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} \\ -k_m l_m & k_m l_m & -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} \\ b_m & -b_m & b & -b & b & -b & -b & b & -b & b \end{bmatrix} \begin{bmatrix} \omega_{m1}^2 \\ \omega_{m2}^2 \\ \omega_1^2 \\ \omega_2^2 \\ \omega_3^2 \\ \omega_4^2 \\ \omega_5^2 \\ \omega_6^2 \\ \omega_7^2 \\ \omega_8^2 \end{bmatrix}$$

Here, k, $k_m$, b, $b_m$ are predetermined coefficients. Coefficients k, $k_m$, b, $b_m$ are fixed values determined by the size, shape, and arrangement, etc., of the sub-rotors **12** and main rotors **22,** and are stored in a storage device in advance. Note that the relationship shown in Equation 1 is merely illustrative, and a different relationship equation may apply when adopting a configuration different from that shown in FIG. **5.** Here, an example where Equation 1 holds is explained.

By separating the terms related to the main rotors **22** and the terms related to the sub-rotors **12** in the right side of Equation 1, the following Equation 2 is obtained.

[Equation 2]

$$\begin{bmatrix} T \\ \tau_\phi \\ \tau_\theta \\ \tau_\psi \end{bmatrix} = \begin{bmatrix} k_m(\omega_{m1}^2 + \omega_{m2}^2) \\ 0 \\ k_m l_m(-\omega_{m1}^2 + \omega_{m2}^2) \\ b_m(\omega_{m1}^2 - \omega_{m2}^2) \end{bmatrix} + \begin{bmatrix} k & k & k & k & k & k & k & k \\ -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} \\ -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} \\ b & -b & b & -b & -b & b & -b & b \end{bmatrix} \begin{bmatrix} \omega_1^2 \\ \omega_2^2 \\ \omega_3^2 \\ \omega_4^2 \\ \omega_5^2 \\ \omega_6^2 \\ \omega_7^2 \\ \omega_8^2 \end{bmatrix}$$

In this embodiment, the two main rotors **22** are controlled to rotate synchronously in opposite directions. Therefore, we can set $\omega_{m1} = \omega_{m2} = \omega_m$. This causes the components of the torques $\tau_\theta$ and $\tau_\psi$ attributable to the main rotors **22** to cancel each other out, leaving only the thrust component as the contribution from the main rotors **22.** Therefore, Equation 2 is transformed as follows.

[Equation 3]

$$\begin{bmatrix} T - 2k_m\omega_m^2 \\ \tau_\phi \\ \tau_\theta \\ \tau_\psi \end{bmatrix} = \begin{bmatrix} k & k & k & k & k & k & k & k \\ -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} \\ -\frac{\sqrt{2}lk}{2} & \frac{\sqrt{2}lk}{2} & \frac{\sqrt{2}lk}{2} & -\frac{\sqrt{2}lk}{2} & -\frac{\sqrt{2}lk}{2} & \frac{\sqrt{2}lk}{2} & \frac{\sqrt{2}lk}{2} & -\frac{\sqrt{2}lk}{2} \\ b & -b & b & -b & -b & b & -b & b \end{bmatrix} \begin{bmatrix} \omega_1^2 \\ \omega_2^2 \\ \omega_3^2 \\ \omega_4^2 \\ \omega_5^2 \\ \omega_6^2 \\ \omega_7^2 \\ \omega_8^2 \end{bmatrix}$$

By acting the inverse matrix of the matrix in the right side of Equation 3 on both sides from the left, the following relationship in Equation 4 is obtained.

[Equation 4]

$$\begin{bmatrix} \omega_1^2 \\ \omega_2^2 \\ \omega_3^2 \\ \omega_4^2 \\ \omega_5^2 \\ \omega_6^2 \\ \omega_7^2 \\ \omega_8^2 \end{bmatrix} = \begin{bmatrix} \frac{1}{8k} & -\frac{\sqrt{2}}{8lk} & -\frac{\sqrt{2}}{8lk} & \frac{1}{8b} \\ \frac{1}{8k} & -\frac{\sqrt{2}}{8lk} & \frac{\sqrt{2}}{8lk} & -\frac{1}{8b} \\ \frac{1}{8k} & \frac{\sqrt{2}}{8lk} & \frac{\sqrt{2}}{8lk} & \frac{1}{8b} \\ \frac{1}{8k} & \frac{\sqrt{2}}{8lk} & -\frac{\sqrt{2}}{8lk} & -\frac{1}{8b} \\ \frac{1}{8k} & -\frac{\sqrt{2}}{8lk} & -\frac{\sqrt{2}}{8lk} & -\frac{1}{8b} \\ \frac{1}{8k} & -\frac{\sqrt{2}}{8lk} & \frac{\sqrt{2}}{8lk} & \frac{1}{8b} \\ \frac{1}{8k} & \frac{\sqrt{2}}{8lk} & \frac{\sqrt{2}}{8lk} & -\frac{1}{8b} \\ \frac{1}{8k} & \frac{\sqrt{2}}{8lk} & -\frac{\sqrt{2}}{8lk} & \frac{1}{8b} \end{bmatrix} \begin{bmatrix} T - 2k_m\omega_m^2 \\ \tau_\phi \\ \tau_\theta \\ \tau_\psi \end{bmatrix}$$

Therefore, once $T\text{-}2k_m\omega_m^2$, $\tau_\varphi$, $\tau_\theta$, $\tau_\psi$ are determined, the rotational speeds of the sub-rotors **12** $\omega_1$, $\omega_2$, $\omega_3$, $\omega_4$, $\omega_5$, $\omega_6$, $\omega_7$, $\omega_8$ can be determined by the calculation in Equation 4. $T\text{-}2k_m\omega_m^2$ corresponds to the total thrust of the plurality of sub-rotors **12.** While $T\text{-}2k_m\omega_m^2$ includes the unknown $\omega_m$, when the ratio between the total thrust of the main rotors **22** and the total thrust of the sub-rotors **12** is fixed, $T\text{-}2k_m\omega_m^2$ can be determined. $T\text{-}2k_m\omega_m^2$ can be calculated by multiplying T by a constant coefficient. For example, if the ratio between the total thrust of the main rotors **22** and the total thrust of the sub-rotors **12** is fixed at 6:4, $T\text{-}2k_m\omega_m^2$ can be determined by multiplying T by the coefficient 0.4. Also, if the ratio between the total thrust of the main rotors **22** and the total thrust of the sub-rotors **12** is fixed at, for example, 3:7, $T\text{-}2k_m\omega_m^2$ can be determined by multiplying T by the coefficient 0.7. Therefore, when the ratio between the total thrust of the main rotors **22** and the total thrust of the sub-rotors **12** is fixed, if the total thrust T of all rotors and the torques $\tau_\varphi$, $\tau_\theta$, $\tau_\psi$ around each axis are determined, the rotational speeds of the sub-rotors **12** $\omega_1$, $\omega_2$, $\omega_3$, $\omega_4$, $\omega_3$, $\omega_6$, $\omega_7$, $\omega_8$ can be determined by the calculation in Equation 4. Additionally, by multiplying the total thrust from all rotors T or the total thrust from the sub-rotors **12** $T\text{-}2k_m\omega_m^2$ by a predetermined coefficient, the total thrust from the main rotors **22** $2k_m\omega_m^2$ can be calculated. Since $k_m$ is known, $\omega_m$ can be calculated from the value of $2k_m\omega_m^2$.

As described above, the control device **30** can determine the rotational speeds of the sub-rotors **12** $\omega_1$, $\omega_2$, $\omega_3$, $\omega_4$, $\omega_5$, $\omega_6$, $\omega_7$, $\omega_8$ and the rotational speed of the main rotors **22** $\omega_m$ based on the desired thrust T and torques $\tau_\varphi$, $\tau_\theta$, $\tau_\psi$ around each axis, and the relationship in Equation 4.

Below, an example of the process for determining the rotational speed of each rotor by the control device **30** will be explained with reference to FIG. **6.**

FIG. **6** is a flowchart showing an example of processing to determine the rotational speed of each sub-rotor **12** and each main rotor **22.** The processing shown in FIG. **6** may be executed by, for example, the flight controller **32** in the control device **30.** The control device **30** can determine the rotational speeds of the eight sub-rotors **12** $\omega_1$, $\omega_2$, $\omega_3$, $\omega_4$, $\omega_5$, $\omega_6$, $\omega_7$, $\omega_8$ and the rotational speed of each main rotor **22** $\omega_m$ by executing the processing from steps S100 to S114.

In step S100, the control device **30** obtains information about the total weight of the multicopter **100** and the implement **200.** The total weight information may be stored in a storage device in advance. Alternatively, the weight of the multicopter **100** may be stored in a storage device in advance, and the weight of the implement **200** may be measured by a sensor. By providing such a sensor, it is possible to estimate the total weight more accurately even when the weight of the implement **200** changes due to work such as chemical spraying or harvesting. The control device **30** may calculate the total weight of the multicopter **100** and the implement **200** based on data obtained from the storage device or the sensor.

In step S102, the control device **30** determines the total thrust T that should be generated by the plurality of sub-rotors **12** and the plurality of main rotors **22** (total thrust). The control device **30** can determine the total thrust T based on the information about the total weight of the multicopter **100** and the implement **200,** and the flight state. For example, during hovering, the control device **30** can determine the total thrust T as a thrust that balances with the total weight of the multicopter **100** and the implement **200.** During horizontal flight, the control device **30** can determine the total thrust T based on the condition that the vertical component of the thrust balances with gravity, taking into account the inclination of the aircraft. During ascent or descent, the control device **30** determines the total thrust T so that the aircraft ascends or descends with the desired acceleration.

In step S104, the control device **30** estimates the current attitude angle of the multicopter **100** based on data obtained from one or more sensors such as an IMU and geomagnetic sensor. The attitude angle represents the inclination of the multicopter **100** from its reference attitude in a coordinate system fixed to the ground.

In step S106, the control device **30** determines the necessary torques $\tau_\varphi$, $\tau_\theta$, $\tau_\psi$ around each axis based on the difference between the current attitude angle of the multicopter **100** and the target attitude angle. The target attitude angle may be determined according to, for example, user operation using a control device or a pre-set flight program. The control device **30** may, for example, determine larger values for each torque as the difference from the target angle becomes larger for the roll angle, pitch angle, and yaw angle respectively.

Note that the processing in steps S104 and S106 may be performed before the processing in steps S100 and S102, or may be performed in parallel.

In step S108, the control device **30** determines a first thrust $T_1$, which is the total thrust to be generated by the plurality of sub-rotors **12,** by multiplying the total thrust T determined in step S102 by a first coefficient $K_1$ ranging from 0 to 1 inclusive. The first coefficient $K_1$ may be set to a predetermined value such as 0.4.

In step S110, the control device **30** determines a second thrust $T_2$, which is the total thrust to be generated by the plurality of main rotors **22,** by either multiplying the total thrust T by a second coefficient $K_2$ (= $1-K_1$), which is the value obtained by subtracting the first coefficient from 1, or by multiplying the first thrust $T_1$ by a third coefficient $K_3$ (= $K_2/K_1$), which is the value obtained by dividing the second coefficient $K_2$ by the first coefficient $K_1$. The calculation of multiplying the total thrust T by the second coefficient $K_2$ and the calculation of multiplying the first thrust $T_1$ by the third coefficient $K_3$ yield the same result.

The ratio between the second thrust $T_2$, which is the total thrust of the main rotors **22,** and the first thrust $T_1$, which is the total thrust of the sub-rotors **12,** may be set to a predetermined ratio such as 6:4. If $T_2$:$T_1$ = 6:4, then the first coefficient is 0.4, the second coefficient is 0.6, and the third coefficient is 1.5. If $T_2$:$T_1$ = 5:5, then the first coefficient is 0.5, the second coefficient is 0.5, and the third coefficient is 1. If $T_2$:$T_1$ = 2:8, then the first coefficient is 0.8, the second coefficient is 0.2, and the third coefficient is 0.25. The third coefficient corresponds to $T_2/T_1$ and may be referred to as the "boost coefficient". The first thrust $T_1$ corresponds to $T-2k_m\omega_m^2$ in Equation 4, and the second thrust $T_2$ corresponds to $2k_m\omega_m^2$ in Equation 4.

In step S112, the control device **30** executes the calculation shown in Equation 4 based on the determined first thrust $T_1$ (= $T-2k_m\omega_m^2$) and the necessary torques $\tau_\varphi$, $\tau_\theta$, $\tau_\psi$ around each axis. This allows the control device **30** to determine the rotational speeds of the sub-rotors **12** $\omega_1$, $\omega_2$, $\omega_3$, $\omega_4$, $\omega_5$, $\omega_6$, $\omega_7$, $\omega_8$.

In step S114, the control device **30** determines the rotational speed $\omega_m$ of each main rotor **22** from the relationship $T_2 = 2k_m\omega_m^2$, based on the second thrust $T_2$ determined in step S106.

Through the above process, the control device **30** can determine the rotational speed of each rotor based on the desired total thrust T and the necessary torques $\tau_\varphi$, $\tau_\theta$, $\tau_\psi$ around each axis. Instead of the processing in step S110 described above, the control device **30** may calculate the second thrust $T_2$ by subtracting the first thrust $T_1$ from the total thrust T needed for flight. Such a calculation can also determine the second thrust $T_2$.

The control device **30** controls each motor **14** and the internal combustion engine (main rotor driver **24**) based on the determined rotational speeds of each sub-rotor **12** and each main rotor **22.** The control device **30** controls each motor **14** through each ESC **16** by sending motor control signals (e.g., PWM signals) indicating the determined rotational speeds of the sub-rotors **12** to each ESC **16.** Additionally, the control device **30** controls the internal combustion engine by sending a control signal indicating the determined rotational speed of the main rotors **22** to the main rotor control unit **26.** These operations are repeatedly executed during flight.

In this way, the control device **30** of the present embodiment calculates a first thrust $T_1$, which is the total thrust to be generated by the plurality of sub-rotors **12,** and calculates a second thrust $T_2$, which is the total thrust to be generated by the main rotors **22,** based on the first thrust $T_1$ and the total thrust T needed for flight. The control device **30** determines the rotational speed of each of the plurality of sub-rotors **12** $\omega_1$~$\omega_8$ based on the first thrust $T_1$, and determines the rotational speed of each main rotor **22** $\omega_m$ based on the second thrust $T_2$. More specifically, the control device **30** determines the total thrust T to be generated by the plurality of sub-rotors **12** (first rotors) and the plurality of main rotors **22** (second rotors), and determines the first thrust $T_1$, which is the total thrust to be generated by the plurality of sub-rotors **12,** by multiplying the total thrust T by a first coefficient $K_1$. The control device **30** further determines the second thrust $T_2$, which is the total thrust to be generated by the plurality of main rotors **22,** by either subtracting the first thrust $T_1$ from the total thrust T, multiplying the total thrust T by a second coefficient $K_2$ (= $1-K_1$), or multiplying the first thrust $T_1$ by a third coefficient (= $(1-K_1)/K_1$). The control device **30** determines the rotational speed of each of the plurality of sub-rotors **12** based on the first thrust $T_1$, and determines the rotational speed of each of the plurality of main rotors **22** based on the second thrust $T_2$.

Through these operations, the control device **30** can sequentially determine the rotational speeds of each sub-rotor **12** and each main rotor **22** during flight, and rotate each sub-rotor **12** and each main rotor **22** at the determined rotational speeds. This makes it possible to bring the multicopter **100** closer to the target attitude and execute the desired flight.

Note that in the examples of FIGs. **3A** and **5,** the multicopter **100** includes two main rotors **22** and eight sub-rotors **12,** but the number of main rotors **22** and sub-rotors **12** is not limited to this example. For example, the number of main rotors **22** may be one or three or more. Additionally, the number of sub-rotors **12** may be a different number such as 4 or 6. Regarding the sub-rotors **12,** various configurations such as quadcopter, hexacopter, or octocopter can be adopted, not limited to the octo-quadcopter configuration shown in FIGs. **3A** and **5.**

In the operation described above, the first coefficient $K_1$, and the second coefficient $K_2$ or the third coefficient $K_3$ may be variable. In other words, the boost coefficient $T_2/T_1$ (corresponding to the third coefficient $K_3$), which is the ratio between the total thrust $T_2$ from the main rotors **22** and the total thrust $T_1$ from the sub-rotors **12,** may be variable. The boost coefficient corresponds to the ratio between the total thrust from the main rotors **22** (second thrust) obtained from the main rotor driver **24** and the total thrust from the sub-rotors **12** (first thrust) obtained from the plurality of motors **14.** The control device **30** may change the first coefficient $K_1$, and the second coefficient $K_2$ or the third coefficient $K_3$, according to the state of the multicopter **100.** For example, the control device **30** may change the first coefficient $K_1$, and the second coefficient $K_2$ or the third coefficient $K_3$, according to the flight mode. Flight modes include, for example, hovering, horizontal flight (forward, backward, or lateral movement (aileron)), ascent, descent, and rotation (rudder). The control device **30** may be configured to maintain the first coefficient $K_1$ at a value less than 0.5 during ascent and hovering, for example. When maintaining the first coefficient $K_1$ at a value less than 0.5, the second coefficient $K_2$ is maintained at a value greater than 0.5, and the third coefficient $K_3$ (boost coefficient) is maintained at a value greater than 1. This enables efficient generation of large thrust by the main rotors **22.** The control device **30** may set the boost coefficient to a value smaller than the value during hovering (e.g., a value less than 1) when adjusting the attitude of the aircraft (yaw, pitch, and/or roll) for landing, horizontal flight, or rudder, etc. This can prevent the large thrust and rotational moment generated by the rotation of the main rotors **22** from interfering with the attitude control function of the sub-rotors **12.**

The control device **30** may be configured to change the first coefficient $K_1$, and the second coefficient $K_2$ or the third coefficient $K_3$, in response to user operation using an external device such as a control device or remote monitoring device. This allows the user to adjust the balance between thrust generation efficiency and attitude control responsiveness, for example, to make it easier to pilot.

<Rudder Control>

Next, as an example of attitude control in this embodiment, an example of rudder control operation will be explained.

Attitude control of the multicopter **10** is performed by bringing the yaw, pitch, and roll angles of the aircraft closer to target angles. Among these, the control to bring the yaw angle closer to a target angle is called "rudder control". The following describes a control method to prevent the actual yaw angle of the aircraft from deviating from the target angle during rudder control. Note that the following control method can be similarly applied to control for adjusting the pitch angle or roll angle of the aircraft, not limited to rudder control.

The control device **30** may be configured to reduce (or eliminate) the total thrust or rotational speed of the main rotors **22** and instead increase the total thrust or rotational speed of the sub-rotors **12** when performing rudder control to adjust the yaw angle of the aircraft to a target angle. Reducing the total thrust or rotational speed of the main rotors **22** can reduce variations in attitude angles during rudder control and stabilize the attitude.

FIG. 7 is a flowchart showing an outline of the operation of the control device **30** related to rudder control. By executing the processing shown in FIG. **7** during the flight of the multicopter **100,** the control device **30** executes control to bring the yaw angle of the aircraft closer to the target angle.

First, in step S200, the control device **30** determines whether to start rudder control. The control device **30** may determine whether to start rudder control based on, for example, commands from an external device such as a control device or remote monitoring device used by the user, or a pre-set flight program. Rudder control may be performed, for example, when changing or maintaining the direction of the aircraft in a desired direction for changing the flight direction or landing. The control device **30** performs rudder control when controlling to a target yaw angle, when a control delay in the yaw angle occurs, or when rotation or oscillation in the yaw direction occurs. When the control device **30** determines to start rudder control, it proceeds to step S202.

In step S202, the control device **30** reduces the total thrust of the main rotors **22.** For example, by decreasing the boost coefficient, the rotational speed of each main rotor **22** can be reduced, thereby reducing the total thrust of the main rotors **22.** As mentioned earlier, the control device **30** may be configured to set the boost coefficient to a value greater than 1 during hovering, making the total thrust $T_2$ of the plurality of main rotors **22** greater than the total thrust $T_1$ of the plurality of sub-rotors **12.** In contrast, when executing rudder control, the control device **30** can control the total thrust $T_2$ of the plurality of main rotors **22** to be less than the total thrust $T_1$ of the plurality of sub-rotors **12** by changing the boost coefficient to a value less than 1. The control device **30** may decrease the rotational speed of each of the plurality of main rotors **22** to reduce the total thrust of the plurality of main rotors **22** by 5% or more when performing the rudder control. For example, the control device **30** may decrease the rotational speed of each of the plurality of main rotors **22** to less than 70%, less than 50%, less than 30%, or less than 10% of the rotational speed of each of the plurality of main rotors **22** during hovering. Alternatively, the control device **30** may stop the rotation of each of the plurality of main rotors **22** when performing the rudder control. In other words, the control device **30** may change the boost coefficient to 0 (zero) when performing the rudder control.

In step S204, the control device **30** adjusts the rotational speed of each sub-rotor **12.** The control device **30** can determine the rotational speed of each sub-rotor **12** by a process similar to step S112 shown in FIG. **6.** At this time, the rotational speed of each sub-rotor **12** increases to compensate for the thrust reduction due to the decrease in the rotational speed of the main rotors **22.** In other words, the control device **30** compensates for the decreased total thrust of the plurality of main rotors **22** due to the decreased rotational speed of each of the plurality of main rotors **22** by increasing the rotational speed of the plurality of sub-rotors **12.** The control device **30** inputs motor control signals indicating the determined rotational speeds to the respective ESCs **16.**

In step S206, the control device **30** determines whether the difference between the current yaw angle and the target angle is less than a threshold. The threshold is set to a sufficiently small value close to 0 degrees. If the difference between the current yaw angle and the target angle is equal to or greater than the threshold (No case), return to step S204. If the difference between the current yaw angle and the target angle is less than the threshold (Yes case), end the rudder control and proceed to step S208.

In step S208, the control device **30** returns the rotational speed of each main rotor **22** to its original speed. For example, the control device **30** returns the rotational speed of each main rotor **22** to its original value by returning the boost coefficient to the value before the change in step S202. Accordingly, the rotational speed of each sub-rotor **12** is also adjusted to return to its original value.

The operation shown in FIG. **7** may be repeatedly executed by, for example, the flight controller **32** of the control device **30** during the flight of the multicopter **10.**

Through the above operations, the control device **30** can reduce the thrust generated by the plurality of main rotors **22** by decreasing the rotational speed of each main rotor **22** when executing rudder control. This can reduce variations in the yaw angle during rudder control and make it easier to approach the desired angle. According to numerical experiments conducted by the present inventors, it was confirmed that the closer the boost coefficient is to 0, the more the variation in the yaw angle can be reduced when performing rudder control.

The above control can be applied not only to rudder control for adjusting the yaw angle of the aircraft but also to control for adjusting the roll angle and/or pitch angle of the aircraft. That is, the control device **30** may reduce the total thrust of the main rotors **22** and increase the total thrust of the sub-rotors **12** when performing attitude control to bring the roll, pitch, and yaw angles of the aircraft closer to target angles. Such control can improve the responsiveness of attitude control.

<Engine Control>

Next, an example method for controlling the internal combustion engine (engine) will be explained.

As described above, the multicopter **100** of this embodiment includes a plurality of rotors including a plurality of sub-rotors **12** and at least one main rotor **22.** The plurality of sub-rotors **12** are each driven by a plurality of motors **14.** The at least one main rotor **22** is driven by the main rotor driver **24,** which is an internal combustion engine. The control device **30** performs attitude control of the aircraft by controlling the rotation of the plurality of sub-rotors **12** through controlling the plurality of motors **14.** The control device **30** generates a main thrust by controlling the rotation of the at least one main rotor **22** through controlling the internal combustion engine via the main rotor control unit **26.**

FIG. **8** is a flowchart showing an example of a control method for motors **14** and internal combustion engine. The control method shown in FIG. **8** is executed by the control device **30** and the main rotor control unit **26.**

In step S300, the control device **30** determines the rotational speed of each sub-rotor **12** and the rotational speed of each main rotor **22.** The rotational speed of each rotor may be determined by the method explained with reference to FIG. **6.** Hereinafter, the rotational speed of each sub-rotor **12** may be referred to as "first rotational speed" and the rotational speed of each main rotor **22** may be referred to as "second rotational speed". The first rotational speed is determined individually for each sub-rotor **12.** The second rotational speed may be determined individually for each main rotor **22** or may be determined collectively at a common value.

In step S302, the control device **30** generates a first PWM signal with a duty ratio corresponding to the rotational speed of each sub-rotor **12,** as a first control signal, for each sub-rotor **12.** The first PWM signal corresponds to the motor control signal mentioned earlier. The duty ratio of the PWM signal indicates the motor's rotational speed. Note that the first control signal is not limited to a PWM signal and may be other types of signals.

In step S304, the control device **30** generates a second PWM signal with a duty ratio corresponding to the rotational speed of each main rotor **22.** In this embodiment, each main rotor **22** is driven by an internal combustion engine, but each main rotor **22** may be driven by an electric motor. For example, the configuration of the first rotation drive device **3A** or the third rotation drive device **3C** shown in FIG. **1A** may be adopted to drive some rotors as main rotors and the remaining rotors as sub-rotors. The control device **30** can generate a second PWM signal to be input to an ESC that would drive such an electric motor for each main rotor **22,** if the main rotors were driven by electric motors.

In step S306, the main rotor control unit **26** converts the second PWM signal generated by the control device **30** into a second control signal that determines the rotational speed of the internal combustion engine. In this embodiment, where each main rotor **22** is driven by an internal combustion engine, the second PWM signal for driving an electric motor cannot be used directly for controlling the internal combustion engine. Therefore, the main rotor control unit **26** converts the second PWM signal into a second control signal for controlling the internal combustion engine. The second control signal may be, for example, a signal that determines the opening degree of the throttle valve of the internal combustion engine. The main rotor control unit **26** can convert the second PWM signal into the second control signal based on data such as a table showing the relationship between the duty ratio of the second PWM signal and the opening degree of the throttle valve, or the relationship between the duty ratio of the second PWM signal and the rotational speed of the internal combustion engine. The duty ratio of the second PWM signal correlates with the rotational speed of each main rotor **22** (second rotational speed). Therefore, a table showing the relationship between the duty ratio of the second PWM signal and the rotational speed of the internal combustion engine corresponds to a table that converts the second rotational speed to the internal combustion engine's rotational speed. Such data may be stored in advance in a storage device internal or external to the control device **30.** The control device **30** can convert the second PWM signal into the second control signal by retrieving such data from the storage device and referring to it. The data such as the above table may be stored on a server computer in the cloud. In that case, the control device **30** can obtain the data through the communication device **74.**

In step S308, the control device **30** controls each motor **14** by inputting the first control signal generated for each sub-rotor **12** to the respective ESC **16.** Additionally, the main rotor control unit **26** controls the main rotor driver **24** (internal combustion engine) using the second control signal.

Through the above operations, each motor **14** and the internal combustion engine can be controlled to rotate each sub-rotor **12** and each main rotor **22** at the desired rotational speeds. While in this embodiment the control shown in FIG. **8** is executed by the control device **30** and the main rotor control unit **26,** a single control device or control system having the functions of the control device **30** and the main rotor control unit **26** may be configured to execute the control shown in FIG. **8.** That is, the control device or control system may be configured to determine the rotational speed of each of the plurality of sub-rotors **12** (first rotational speed) and the rotational speed of at least one main rotor **22** (second rotational speed), generate a first control signal to rotate each of the plurality of motors **14** based on the first rotational speed, and generate a second control signal to drive the internal combustion engine based on the second rotational speed. Such a control device or control system may, for example, generate a signal with a duty ratio corresponding to the first rotational speed of each sub-rotor **12** (e.g., the first PWM signal mentioned above) as the first control signal, generate a signal with a duty ratio corresponding to the second rotational speed of at least one second rotor (e.g., the second PWM signal mentioned above), and convert the second PWM signal into a second control signal that defines the rotational speed of the internal combustion engine based on data such as the aforementioned table.

Below, example configurations for implementing the above control will be explained in more detail with reference to FIGs. **9** to **12.**

FIG. **9** is a block diagram showing an example configuration of the flight controller **32** in the control device **30.** In this example, the flight controller **32** includes a module **322** that determines the rotational speed of each sub-rotor **12** for attitude control, a module **324** that generates a first PWM signal (first control signal) with a duty ratio corresponding to the rotational speed of each sub-rotor **12,** and a module **326** that generates a second PWM signal with a duty ratio corresponding to the rotational speed of each main rotor **22.** The first PWM signal is input to each of the plurality of ESCs **16.** In the example shown in FIG. **9,** PWM signals #1 to #8 are input to eight ESCs **16** corresponding to eight sub-rotors **12** respectively. In the example of FIG. **9,** PWM signals #1 to #8 are also input to the module **326** that generates the PWM signal for the main rotors **22.** Module **326** generates a PWM signal for the main rotors **22** (second PWM signal) based on these PWM signals #1 to #8, and outputs the second PWM signal to the main rotor control unit **26.** The main rotor control unit **26** converts the second PWM signal into a second control signal, which is an engine control signal, and controls the internal combustion engine based on the second control signal.

FIG. **10** is a diagram showing an example configuration of the module **326** for generating the PWM signal for the main rotors **22.** Module **326** includes multiple adders **326a,** a filter calculator **326b,** and a multiplier **326c.** The adders **326a** are provided in the same number as the number of sub-rotors **12.** The adders **326a** add the duty values of the PWM signals #1 to #8 input from module **324** to output a duty sum value. The duty sum value correlates (e.g., is proportional) to the total thrust of the plurality of sub-rotors **12.** The signal of the duty sum value is input to the filter calculator **326b.** The filter calculator **326b** removes high-frequency components from the duty sum value signal, smooths the time variation of the signal, and outputs it. The signal output from the filter calculator **326b** is sent to the multiplier **326c.** The multiplier **326c** generates and outputs a PWM signal for the main rotors **22** by multiplying the signal by a boost coefficient. Note that the functions shown in FIG. **10** may be realized by hardware or by software.

FIG. **11** is a graph showing an example of time variation of duty sum value of PWM signals for sub-rotors and duty value of PWM signal for main rotors. In the example of FIG. **11,** the boost coefficient is maintained at a constant value, and the ratio between the duty sum value of the PWM signals for the sub-rotors **12** and the duty value of the PWM signal for the main rotors **22** is constant. As mentioned earlier, the boost coefficient may fluctuate during flight according to the state of the multicopter **100** or commands from external devices.

FIG. **12** is a diagram showing an example configuration of the main rotor control unit **26.** The main rotor control unit **26** shown in FIG. **12** includes a module **26a** that determines the target rotation speed of the internal combustion engine (engine), a subtractor **26b,** a module **26c** that executes calculations for PID control, a module **26d** that generates signals for CAN communication, a module **26f** that measures the pulse interval of engine rotation pulse signals output from sensors installed in the internal combustion engine, and a module **26e** that calculates the actual rotation speed of the engine based on the pulse interval. The main rotor control unit **26** further includes a storage device **26g** that stores a target rotation speed table, which is data showing the relationship between the duty ratio of the PWM signal for the main rotors **22** and the target rotation speed of the engine. Here, the engine rotation speed means the number of revolutions of the engine per unit time (e.g., unit: rpm). Note that the functions shown in FIG. **12** may be realized by hardware or by software.

The main rotor control unit **26** determines the target rotation speed of the engine based on the PWM signal for the main rotors **22** output from the flight controller **32** and the target rotation speed table.

FIG. **13** is a graph showing an example of the relationship between PWM signal duty ratio and engine rotation speed. The target rotation speed table may be created in advance based on a relationship as shown in FIG. **13** and stored in the storage device **26g.** In this example, the rotational speed of each main rotor **22** is proportional to the duty ratio of the PWM signal. The target rotation speed table is an example of a table that converts the rotational speed of each main rotor **22** into the rotational speed of the internal combustion engine. The main rotor control unit **26** can convert the PWM signal into an engine control signal (second control signal) that drives the internal combustion engine based on such a table.

The main rotor control unit **26** determines the target rotation speed of the engine while measuring the pulse interval of engine rotation pulse signals output from the sensor and calculating the actual engine rotation speed based on that pulse interval. The main rotor control unit **26** performs subtraction between the target rotation speed and the actual rotation speed of the engine, and executes PID control to adjust the engine control signal so that the difference between them approaches zero. The main rotor control unit **26** controls the main rotor driver **24** (internal combustion engine) with the engine control signal determined to bring the difference between the target rotation speed and the actual rotation speed of the engine close to zero. This makes it possible to rotate the main rotors **22** at the desired rotational speed.

In the above example, a table showing the relationship between the PWM signal duty ratio and the engine target rotation speed is used, but alternatively, data such as a table showing the relationship between the PWM signal duty ratio and the opening degree of the throttle valve of the internal combustion engine may be used. Based on such data, the main rotor control unit **26** can convert the PWM signal for the main rotors **22** (second PWM signal) into an engine control signal indicating the opening degree of the throttle valve. Such an engine control signal can be used as a second control signal to drive the internal combustion engine.

As described above, when controlling the rotational speed of each main rotor **22,** the flight controller **32** in the control device **30** of this embodiment generates a PWM signal with a duty ratio corresponding to the rotational speed. The main rotor control unit **26** converts the PWM signal into an engine control signal based on a table that defines a relationship such as that shown in FIG. **13,** and controls the internal combustion engine using the engine control signal. With this configuration, it is possible to reuse a flight controller used in a battery-driven or series hybrid drive type where the main rotors **22** are driven by electric motors, in the parallel hybrid drive type configuration of this embodiment. Therefore, it is possible to control the internal combustion engine that drives the main rotors **22** in the parallel hybrid drive type without changing the flight controller.

The control device **30** of the embodiment of the present disclosure may be realized by a digital computer system programmed to execute each process described with reference to FIGs. **6** to **8.**

FIG. **14** is a block diagram showing an example of hardware configuration of the control device **30.** The control device **30** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The processor **34** is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **30** and other electronic components or electronic control units (ECUs). For example, the communication I/F **38** may perform wired communication complying with various protocols. The communication I/F **38** may perform wireless communication complying with Bluetooth® standards and/or Wi-Fi® standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **30** may include, as separate components, a flight control device such as the flight controller **32** and an upper-level computer (companion computer). Also, a system including the control device **30** and the main rotor control unit **26** may be used as a "control device".

Additionally, part or all of the functions of the control device **30** may be realized by one or more servers (computers) **500** or terminal devices (including portable and fixed types) **400** connected to the communication device **74** of the multicopter **100** via a communication network **N,** as shown in FIG. **15.** Agricultural machines **700** such as tractors may be connected to this communication network **N,** and communication may be performed between the multicopter **100** and the agricultural machine **700.** Part of the data used for processing by the control device **30** and control signals for the multicopter **100** may be provided to the multicopter **100** from the agricultural machine **700** through the communication network **N.**

In the unmanned aerial vehicle according to the above embodiment, the "attitude control device" includes a plurality of electric motors, and the "main thrust generating device" includes an internal combustion engine. In other words, the unmanned aerial vehicle according to the above embodiment includes the rotation drive device **3D** shown in FIG. **1A.** However, even with the rotation drive devices **3A, 3B,** and **3C** shown in FIG. **1A,** an unmanned aerial vehicle including both an "attitude control device" and a "main thrust generating device" can be realized by making some motors **14** or power transmission systems **23** different from other motors **14** or power transmission systems **23.**

Additionally, the unmanned aerial vehicle may include a plurality of internal combustion engines having different outputs and response speeds. In such a case, the internal combustion engine with relatively low output and relatively high response speed may constitute the "attitude control device," while the internal combustion engine with relatively high output and relatively low response speed may constitute the "main thrust generating device".

## INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

## REFERENCE SIGNS LIST

**2**...rotor (propeller), **3**...rotation drive device, **4**...main body, **4a**...control device, **4b**...sensors, **4c**...communication device, **5**...body frame, **10**...multicopter, **12**...sub-rotor, **14**...motor, **16**...ESC, **22**...main rotor, **24**...main rotor driver, **26**...main rotor control unit, **30**...control device, **32**...flight controller, **42**...electric generator, **44**...power management device, **52**...battery, **54**...battery management device, **72**...sensors, **74**...communication device, **100**...multicopter, **200**...implement

## Claims

**1.** An unmanned aerial vehicle comprising:

a plurality of rotors including a plurality of first rotors and at least one second rotor; and
a control device to perform attitude control of a body of the vehicle by controlling rotation of the plurality of first rotors, and generate a main thrust by controlling rotation of the at least one second rotor, wherein
the control device:

calculates a first thrust that is a total thrust to be generated by the plurality of first rotors, and calculates a second thrust that is a total thrust to be generated by the at least one second rotor, based on the first thrust and a total thrust needed for flight;
determines a rotational speed of each of the plurality of first rotors based on the first thrust; and
determines a rotational speed of the at least one second rotor based on the second thrust.

2. The unmanned aerial vehicle according to Claim 1, wherein the control device calculates the second thrust by subtracting the first thrust from the total thrust needed for flight.

3. The unmanned aerial vehicle according to Claim 1, wherein the control device:

determines the first thrust by multiplying the total thrust needed for flight by a first coefficient ranging from 0 to 1 inclusive; and
determines the second thrust by multiplying the total thrust by a second coefficient that is obtained by subtracting the first coefficient from 1, or by multiplying the first thrust by a third coefficient that is obtained by dividing the second coefficient by the first coefficient.

4. The unmanned aerial vehicle according to Claim 3, wherein the control device changes the first coefficient, and the second coefficient or the third coefficient, according to a state of the unmanned aerial vehicle.

5. The unmanned aerial vehicle according to Claim 3 or 4, wherein the control device sets the first coefficient to a value less than 0.5 during hovering.

6. The unmanned aerial vehicle according to any one of Claims 3 to 5, wherein the control device determines the second thrust by multiplying the first thrust by the third coefficient.

7. The unmanned aerial vehicle according to any one of Claims 3 to 6, wherein the control device changes the first coefficient, and the second coefficient or the third coefficient, according to the flight mode.

8. The unmanned aerial vehicle according to any one of Claims 3 to 7, wherein the control device changes the first coefficient, and the second coefficient or the third coefficient, in response to user operation.

9. The unmanned aerial vehicle according to any one of Claims 1 to 8, wherein a diameter of the at least one second rotor is larger than a diameter of each of the plurality of first rotors.

10. The unmanned aerial vehicle according to any one of Claims 1 to 9, wherein a thrust per revolution of each of the plurality of second rotors is greater than a thrust per revolution of each of the plurality of first rotors.

11. The unmanned aerial vehicle according to any one of Claims 1 to 10, wherein a distance from a center of the body to a rotation axis of each of the plurality of second rotors is shorter than a distance from the center of the body to a rotation axis of each of the plurality of first rotors.

12. The unmanned aerial vehicle according to any one of Claims 1 to 11, further comprising:

a plurality of electric motors, each configured to drive a respective one of the plurality of first rotors; and
an internal combustion engine to drive the at least one second rotor, wherein
the control device controls rotation of the plurality of first rotors by controlling the plurality of electric motors, and controls rotation of the at least one second rotor by controlling the internal combustion engine.

13. A control method performed by a control device in an unmanned aerial vehicle including a plurality of rotors including a plurality of first rotors and at least one second rotor, and the control device to perform attitude control of a body of the vehicle by controlling rotation of the plurality of first rotors, and generate a main thrust by controlling rotation of the at least one second rotor, the control method comprising:

calculating a first thrust to be generated by the plurality of first rotors;
calculating a second thrust to be generated by the at least one second rotor based on the first thrust and a total thrust needed for flight;
determining a rotational speed of each of the plurality of first rotors based on the first thrust; and
determining a rotational speed of the at least one second rotor based on the second thrust.

*FIG. 1A*

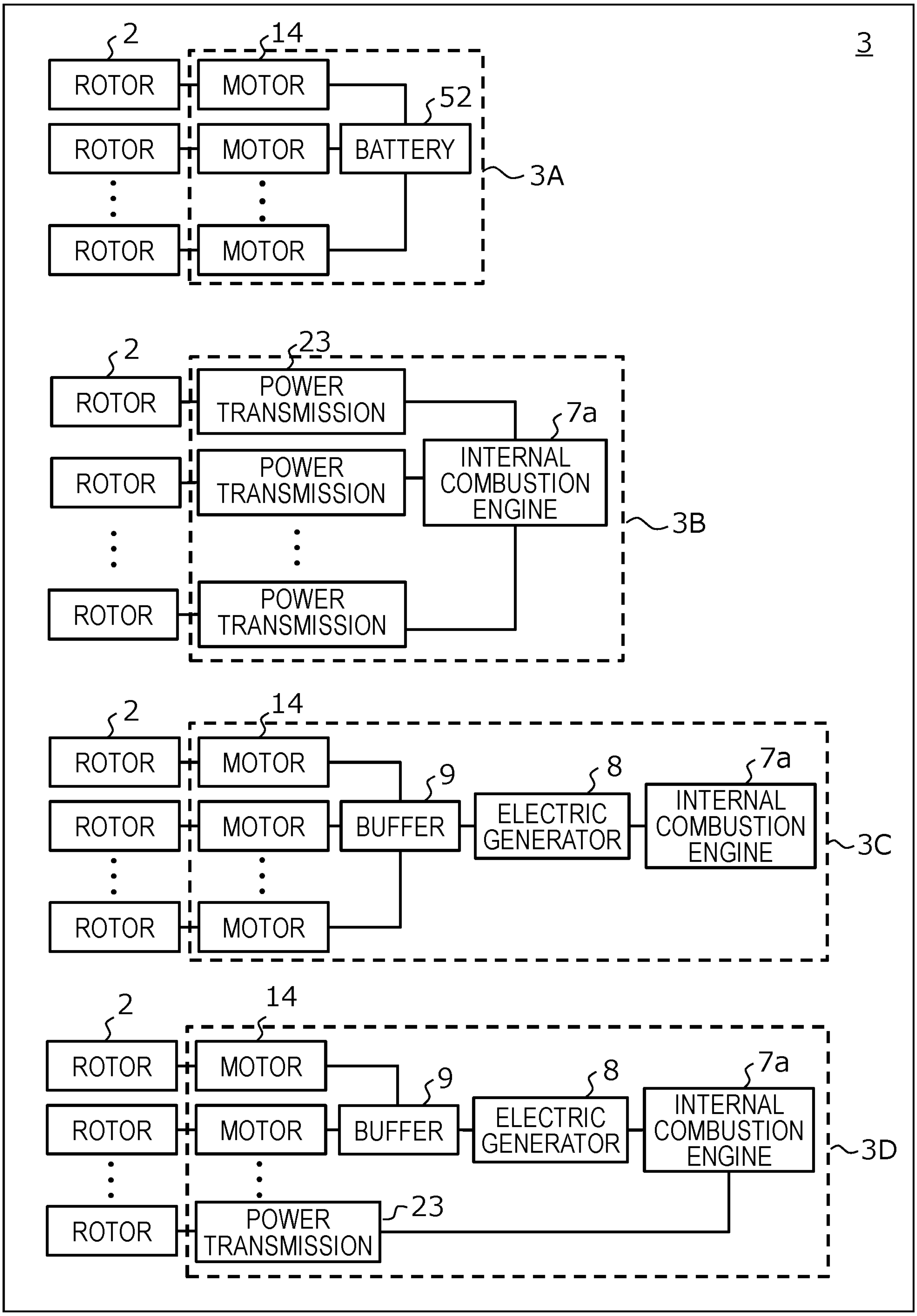
3
2
14
ROTOR
MOTOR
52
ROTOR
MOTOR
BATTERY
3A
ROTOR
MOTOR
2
23
ROTOR
POWER TRANSMISSION
7a
ROTOR
POWER TRANSMISSION
INTERNAL COMBUSTION ENGINE
3B
ROTOR
POWER TRANSMISSION
2
14
ROTOR
MOTOR
9
8
7a
ROTOR
MOTOR
BUFFER
ELECTRIC GENERATOR
INTERNAL COMBUSTION ENGINE
3C
ROTOR
MOTOR
2
14
ROTOR
MOTOR
9
8
7a
ROTOR
MOTOR
BUFFER
ELECTRIC GENERATOR
INTERNAL COMBUSTION ENGINE
3D
ROTOR
POWER TRANSMISSION
23

FIG. 1B

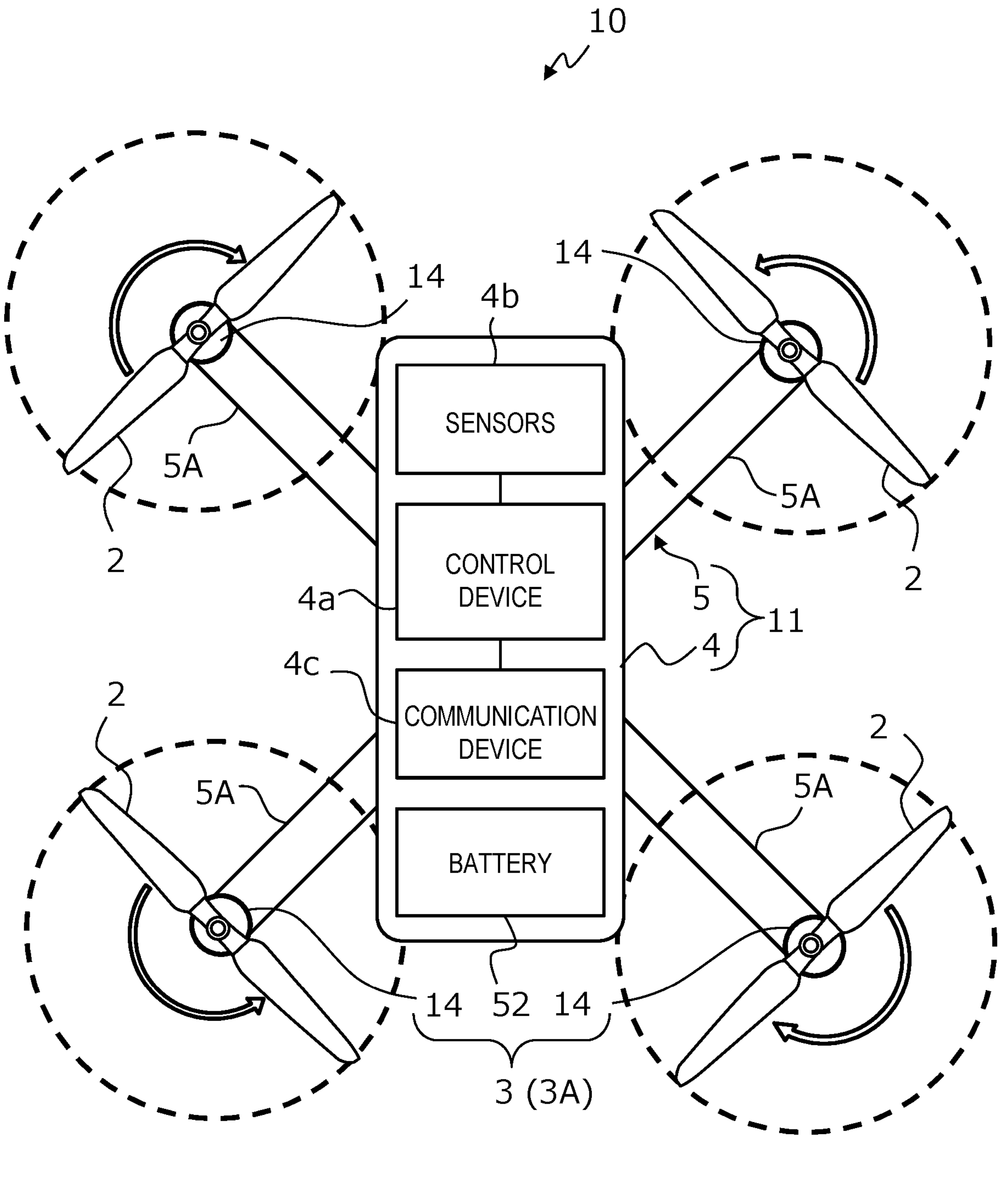
10
14
4b
14
SENSORS
CONTROL
DEVICE
COMMUNICATION
DEVICE
BATTERY
5A
2
5A
2
4a
5
11
4
4c
2
5A
2
5A
14
52
14
3 (3A)

*FIG. 1C*

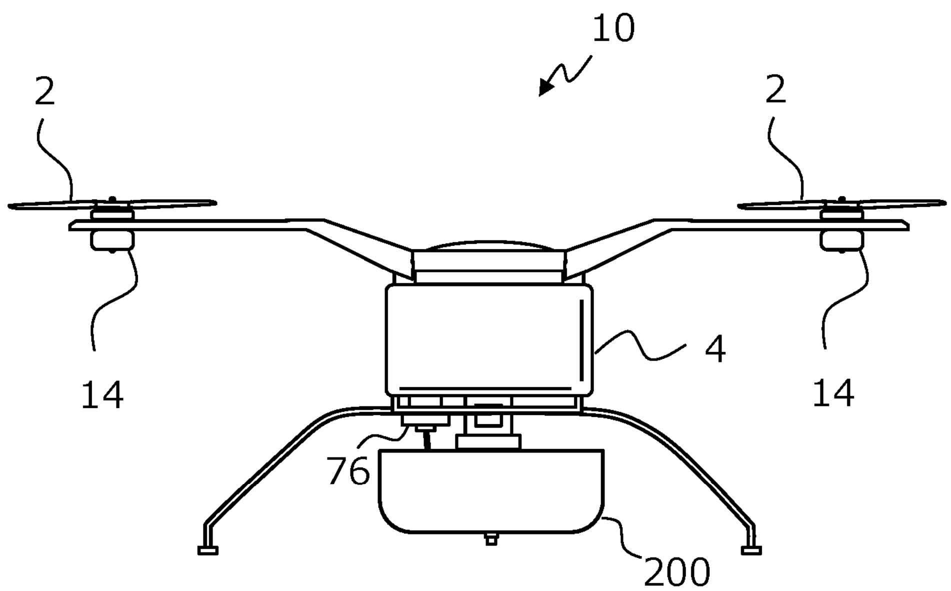

FIG. 1D

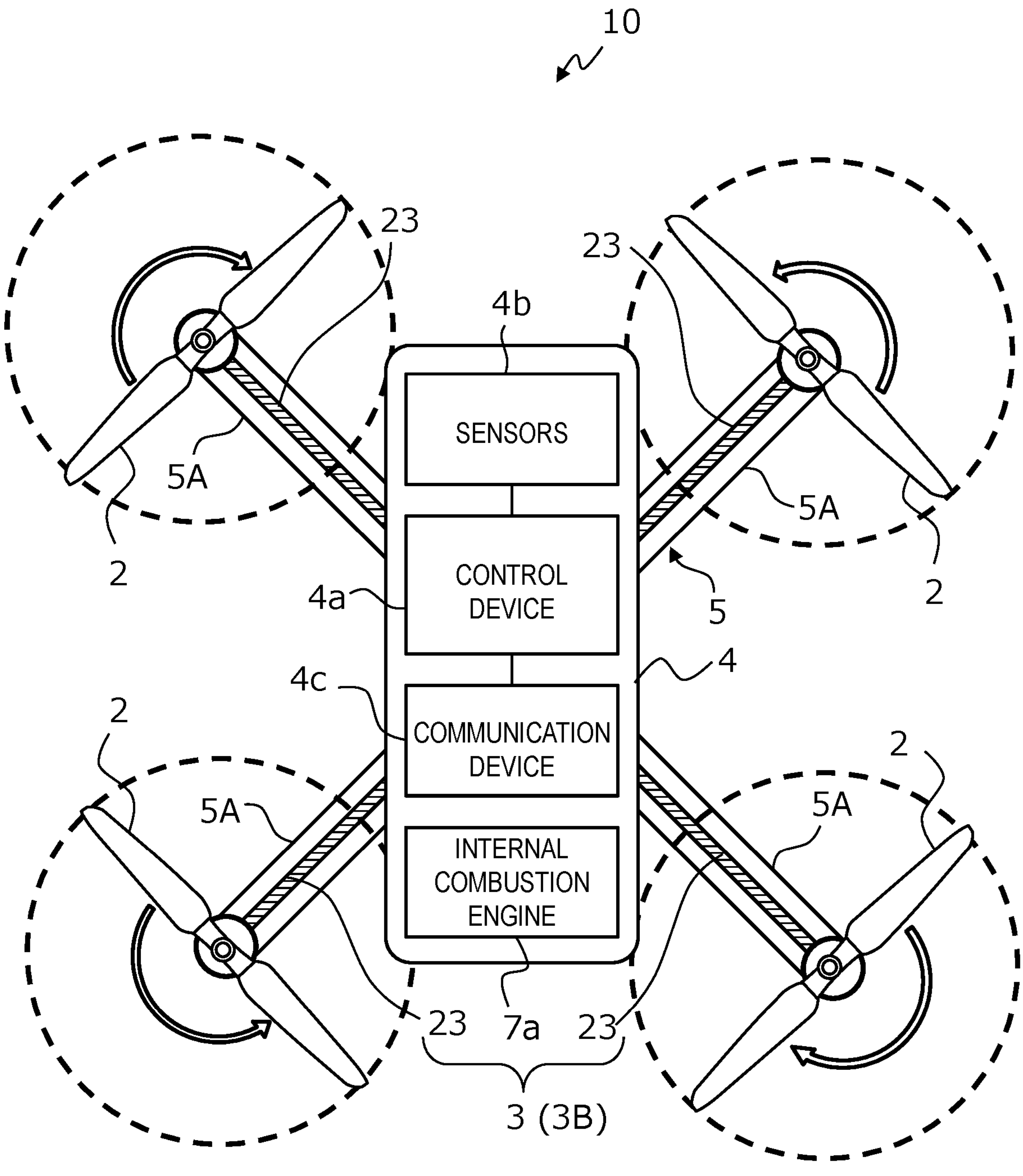
10
23
23
4b
SENSORS
5A
5A
2
2
CONTROL
DEVICE
4a
5
4
4c
2
COMMUNICATION
DEVICE
2
5A
5A
INTERNAL
COMBUSTION
ENGINE
23
7a
23
3 (3B)

*FIG. 2A*

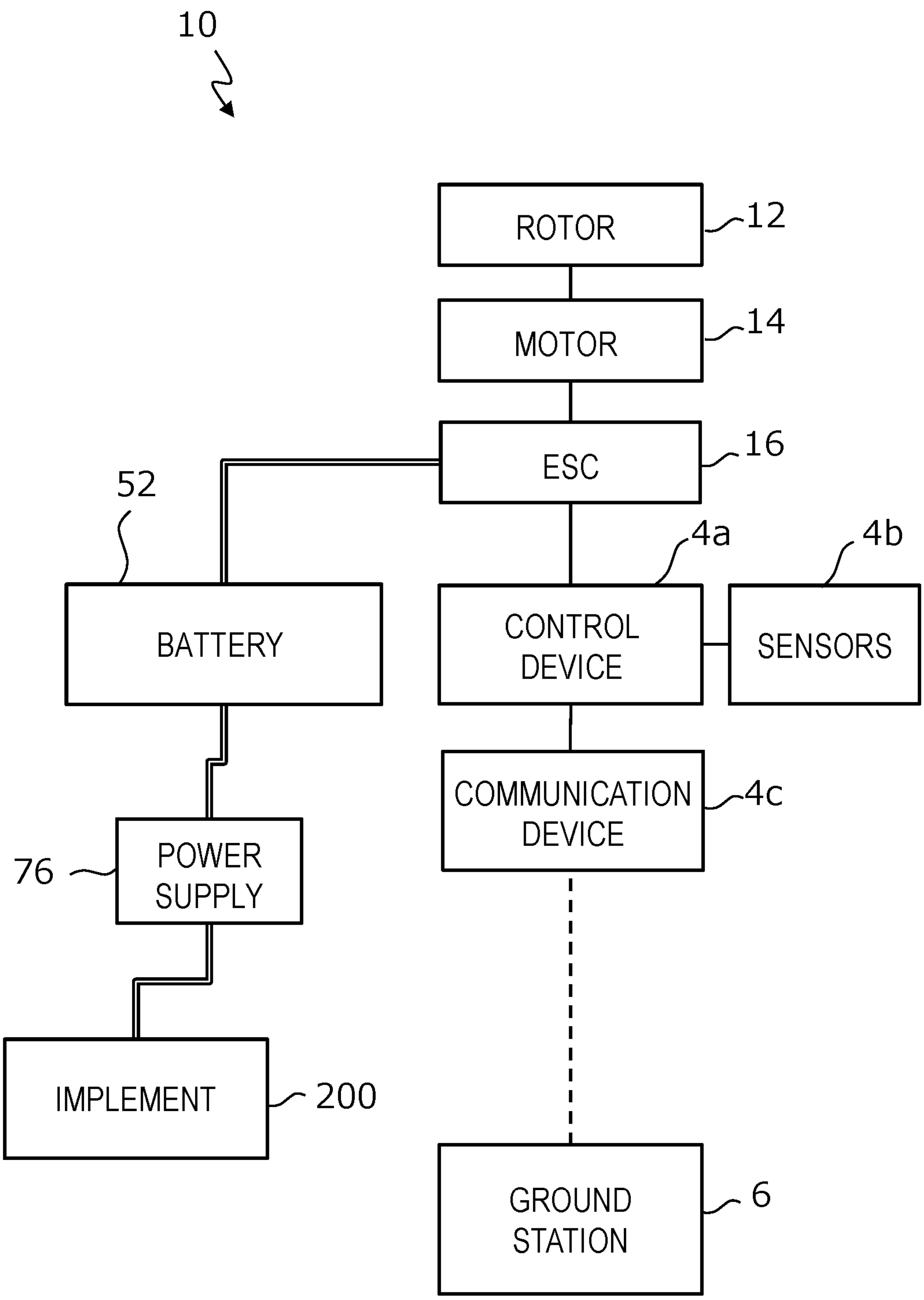
10
ROTOR
12
MOTOR
14
ESC
16
52
4a
4b
BATTERY
CONTROL DEVICE
SENSORS
COMMUNICATION DEVICE
4c
76
POWER SUPPLY
IMPLEMENT
200
GROUND STATION
6

*FIG. 2B*

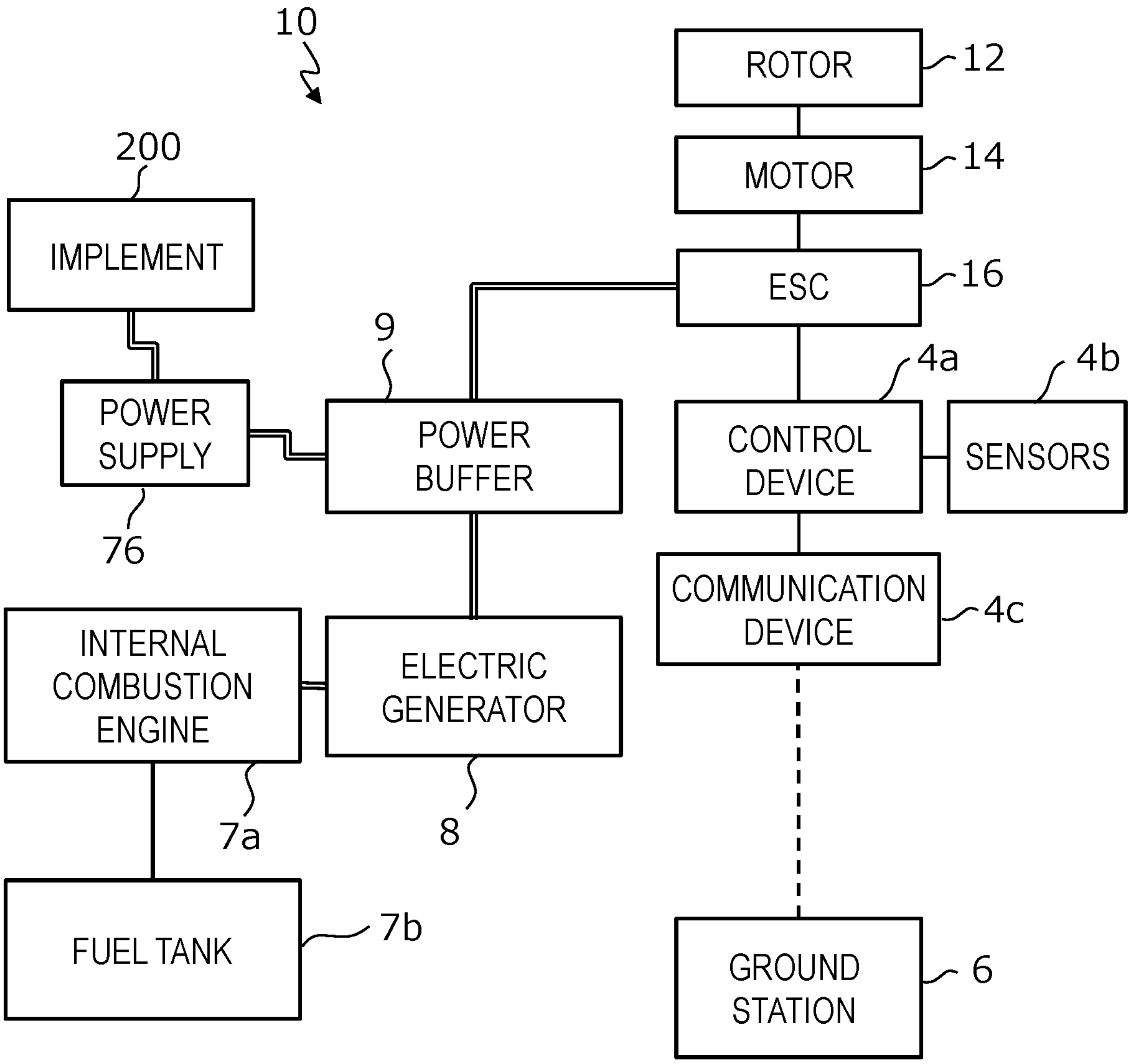
10
200
IMPLEMENT
POWER SUPPLY
76
9
POWER BUFFER
INTERNAL COMBUSTION ENGINE
7a
ELECTRIC GENERATOR
8
FUEL TANK
7b
ROTOR
12
MOTOR
14
ESC
16
4a
4b
CONTROL DEVICE
SENSORS
COMMUNICATION DEVICE
4c
GROUND STATION
6

FIG. 2C

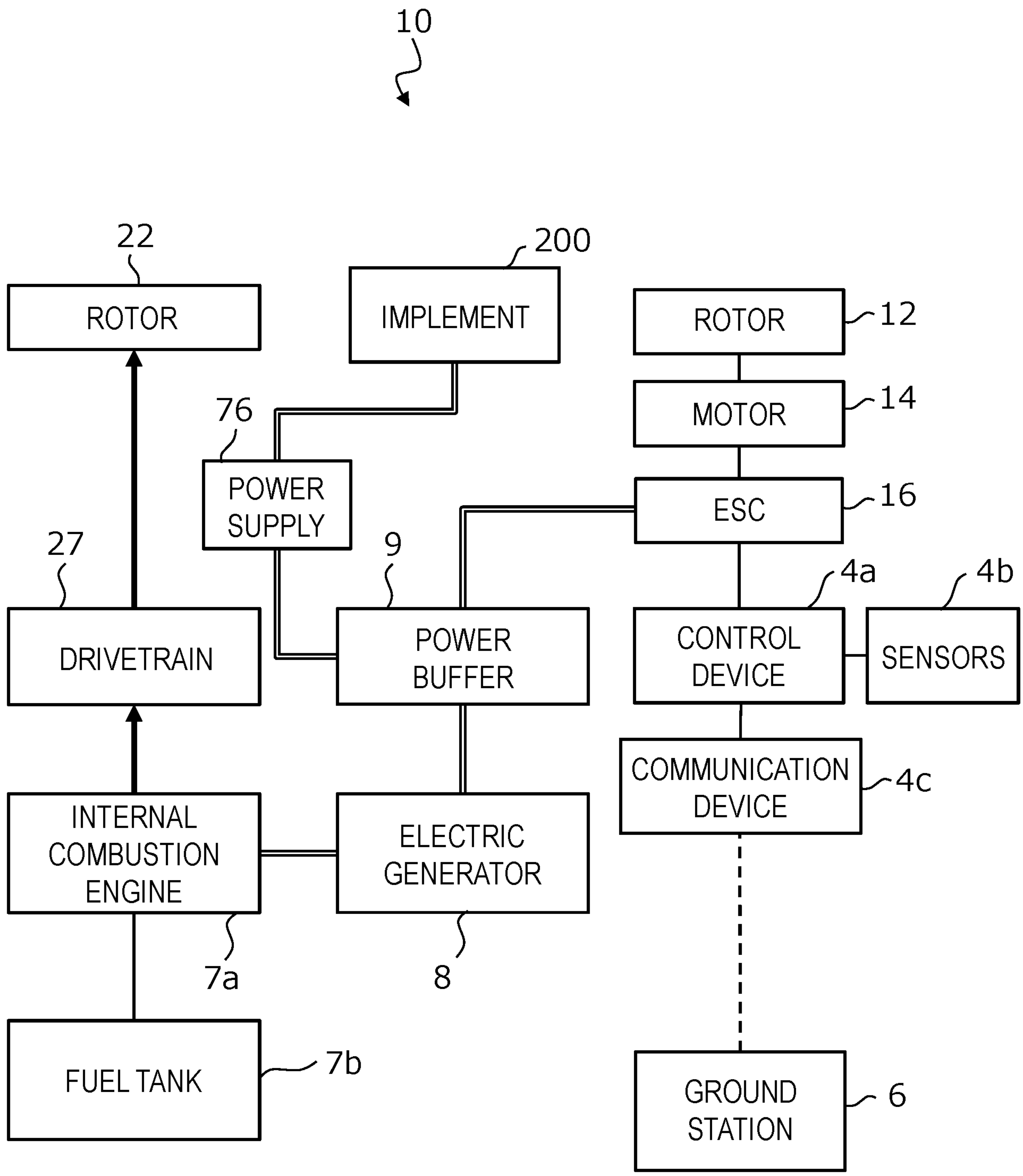
10
22
ROTOR
200
IMPLEMENT
ROTOR
12
MOTOR
14
76
POWER SUPPLY
ESC
16
27
9
4a
4b
DRIVETRAIN
POWER BUFFER
CONTROL DEVICE
SENSORS
COMMUNICATION DEVICE
4c
INTERNAL COMBUSTION ENGINE
ELECTRIC GENERATOR
7a
8
FUEL TANK
7b
GROUND STATION
6

FIG. 3A

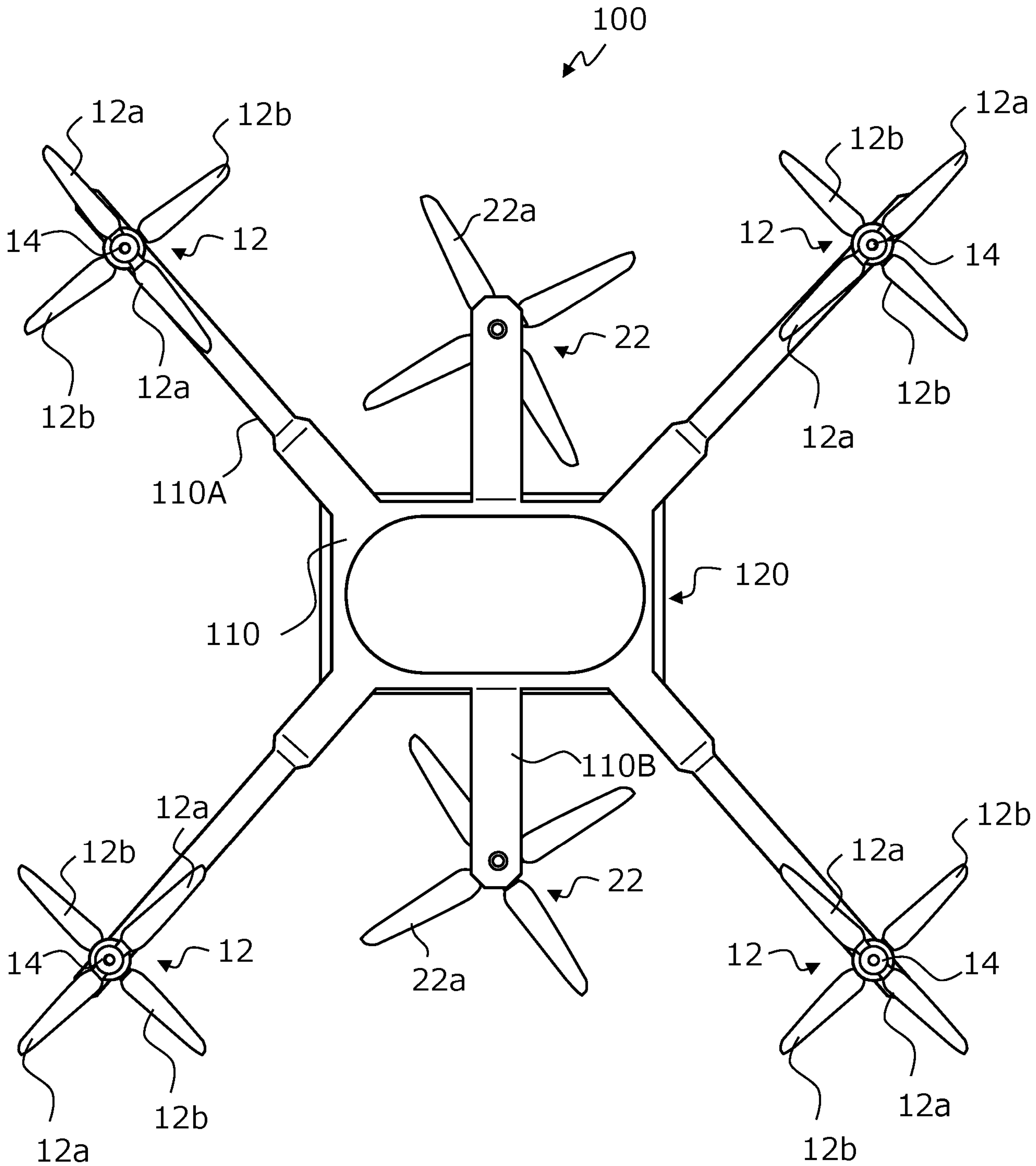
100
12a
12b
12a
12b
22a
14
12
12
14
22
12b
12a
12a
12b
110A
110
120
110B
12a
12b
12a
12b
14
12
22
12
14
22a
12a
12b
12a
12b

*FIG. 3B*

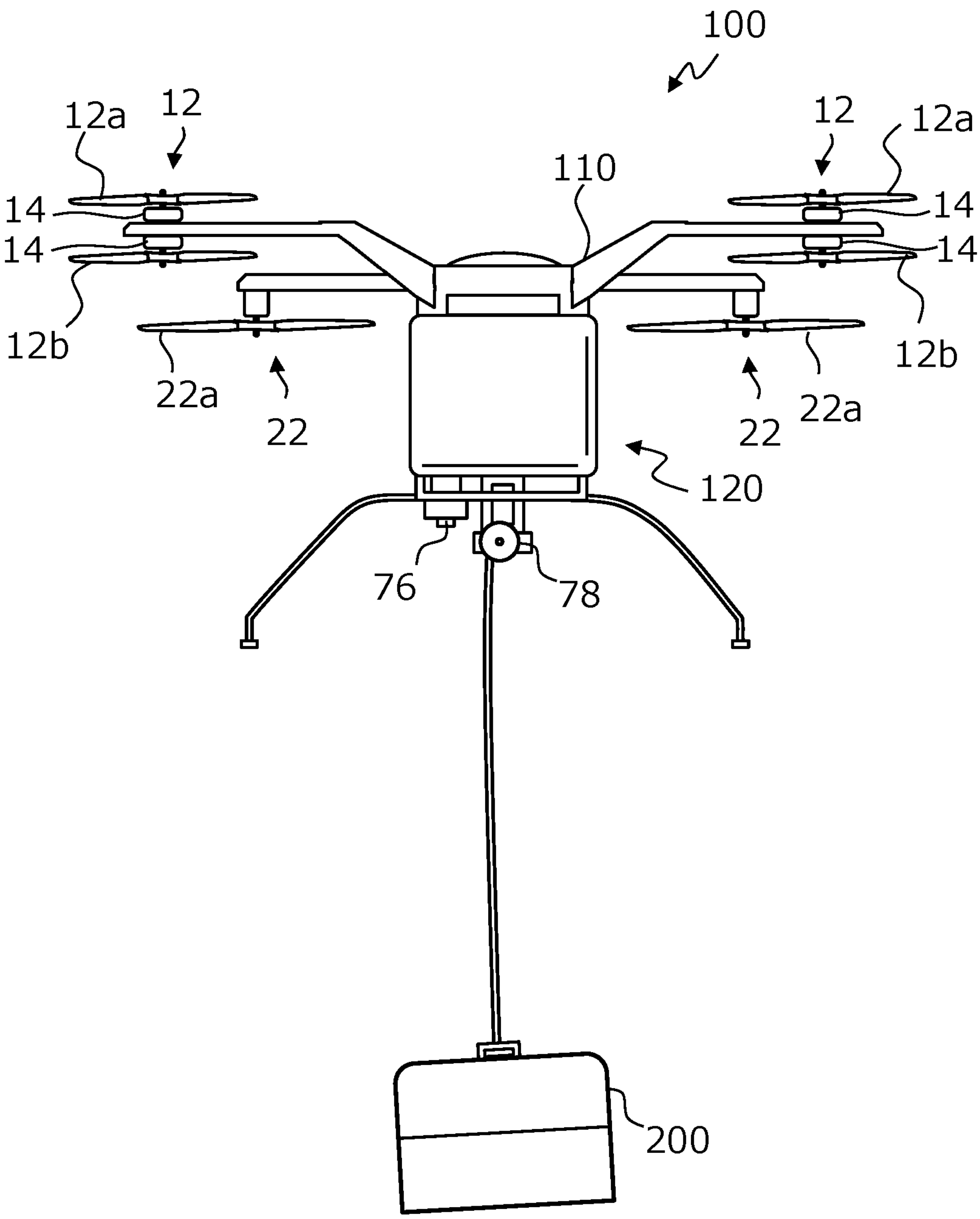
100
12a
12
12
12a
110
14
14
14
14
12b
12b
22a
22
22
22a
120
76
78
200

FIG. 4

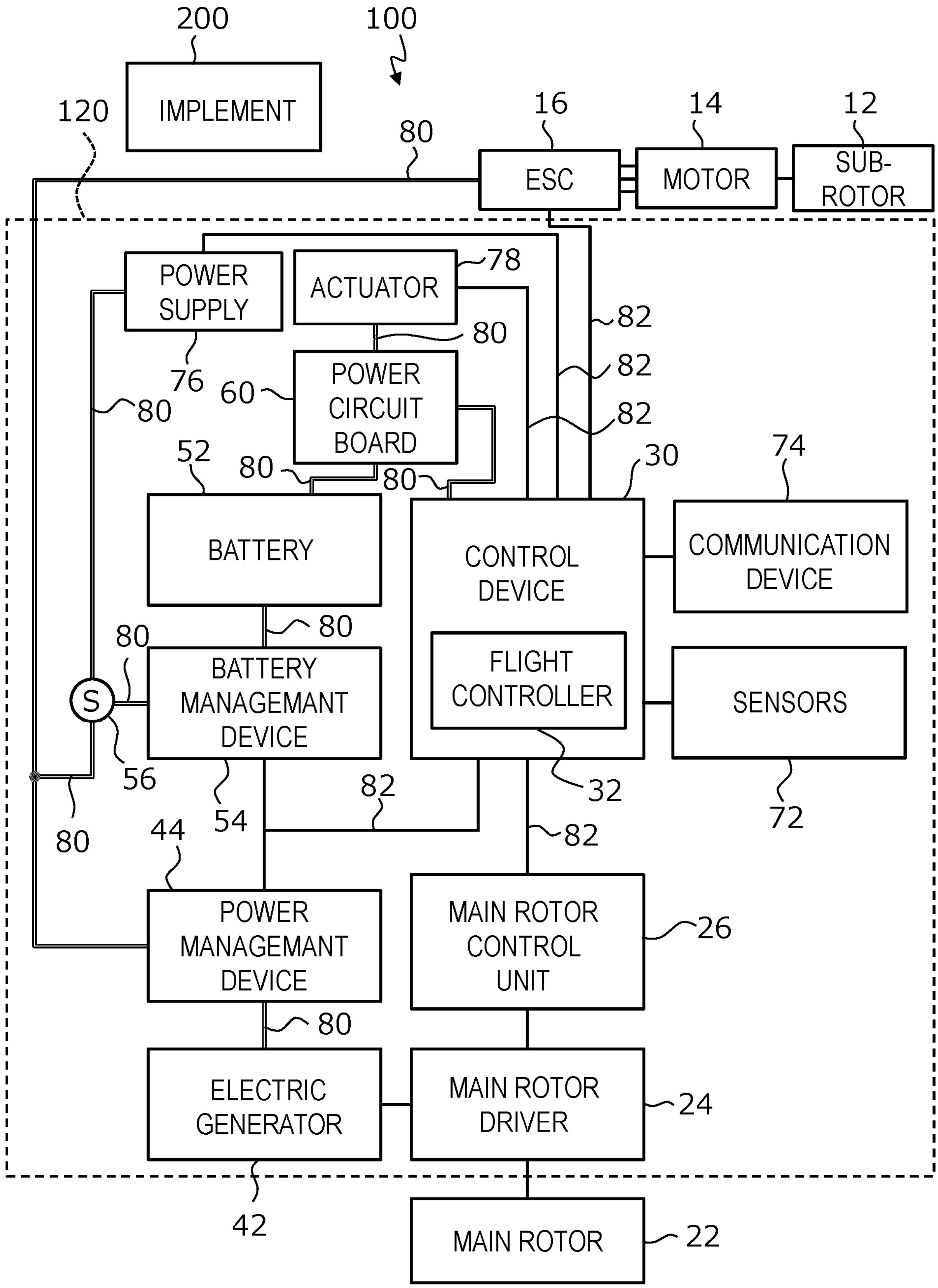
200
100
IMPLEMENT
120
80
16
14
12
ESC
MOTOR
SUB-ROTOR
POWER SUPPLY
ACTUATOR
78
82
80
82
76
60
POWER CIRCUIT BOARD
80
82
52
80
80
30
74
BATTERY
CONTROL DEVICE
COMMUNICATION DEVICE
80
80
S
BATTERY MANAGEMANT DEVICE
FLIGHT CONTROLLER
SENSORS
56
82
32
80
44
54
82
72
POWER MANAGEMANT DEVICE
MAIN ROTOR CONTROL UNIT
26
80
ELECTRIC GENERATOR
MAIN ROTOR DRIVER
24
42
MAIN ROTOR
22

*FIG. 5*

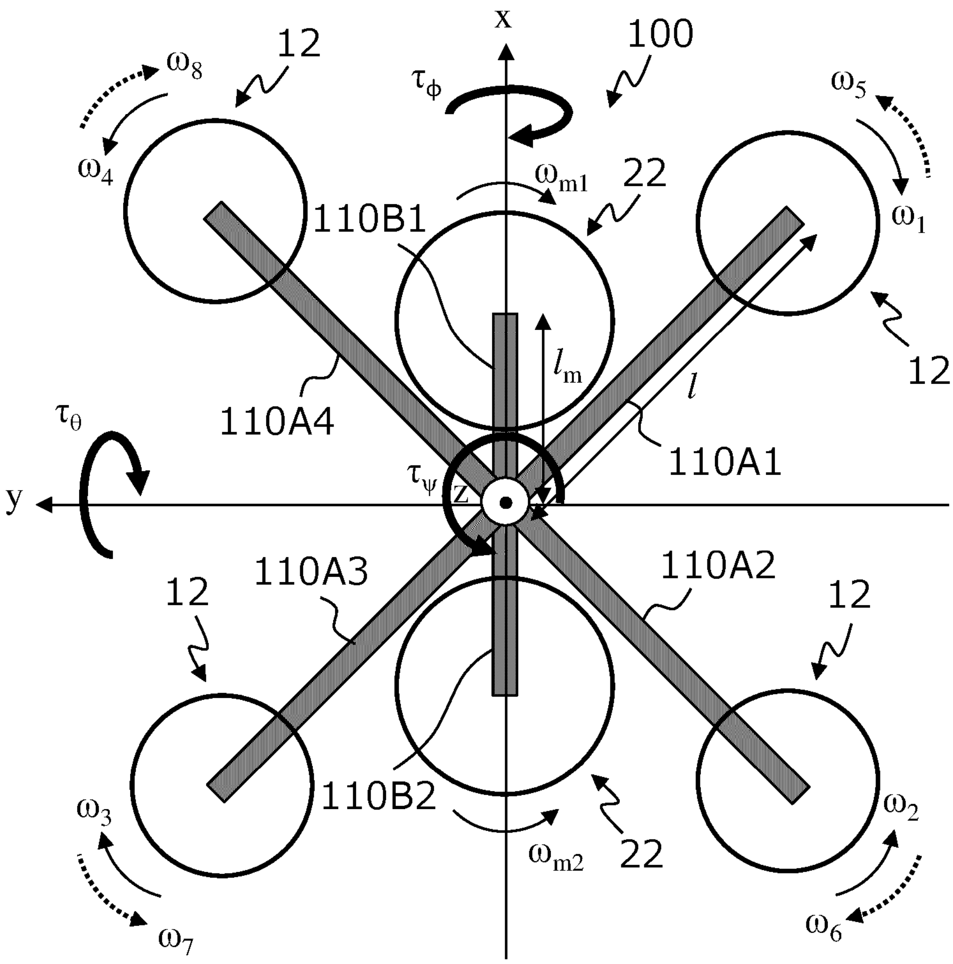
x
100
12
$\omega_8$
$\omega_4$
$\tau_\phi$
$\omega_{m1}$
22
$\omega_5$
$\omega_1$
110B1
12
$l_m$
$l$
110A4
$\tau_\theta$
110A1
$\tau_\psi$
z
y
110A3
110A2
12
12
110B2
$\omega_3$
$\omega_2$
$\omega_{m2}$
22
$\omega_7$
$\omega_6$

FIG. 6

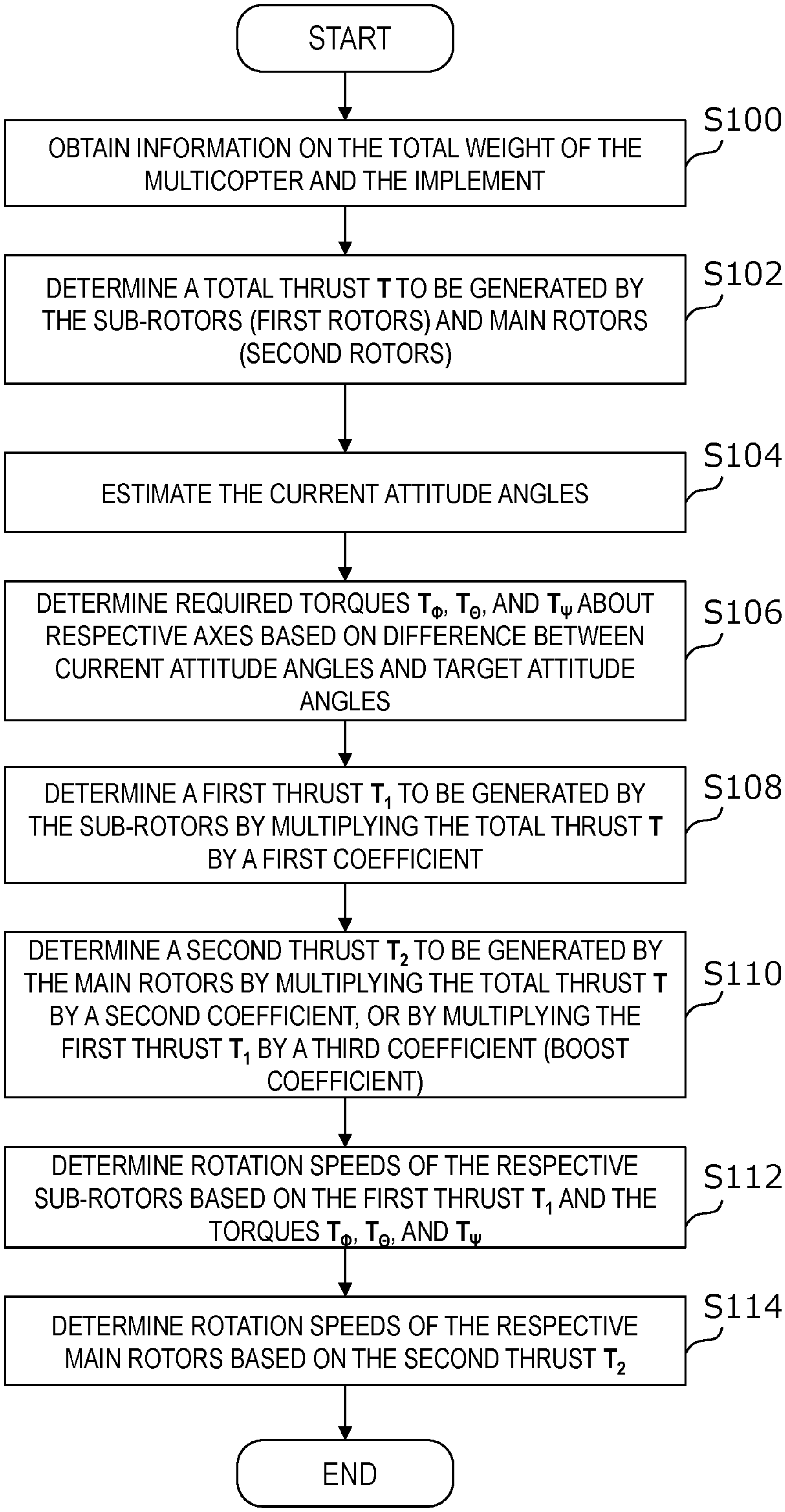
START
S100
OBTAIN INFORMATION ON THE TOTAL WEIGHT OF THE MULTICOPTER AND THE IMPLEMENT
S102
DETERMINE A TOTAL THRUST **T** TO BE GENERATED BY THE SUB-ROTORS (FIRST ROTORS) AND MAIN ROTORS (SECOND ROTORS)
S104
ESTIMATE THE CURRENT ATTITUDE ANGLES
S106
DETERMINE REQUIRED TORQUES $T_\Phi$, $T_\Theta$, AND $T_\Psi$ ABOUT RESPECTIVE AXES BASED ON DIFFERENCE BETWEEN CURRENT ATTITUDE ANGLES AND TARGET ATTITUDE ANGLES
S108
DETERMINE A FIRST THRUST $T_1$ TO BE GENERATED BY THE SUB-ROTORS BY MULTIPLYING THE TOTAL THRUST **T** BY A FIRST COEFFICIENT
S110
DETERMINE A SECOND THRUST $T_2$ TO BE GENERATED BY THE MAIN ROTORS BY MULTIPLYING THE TOTAL THRUST **T** BY A SECOND COEFFICIENT, OR BY MULTIPLYING THE FIRST THRUST $T_1$ BY A THIRD COEFFICIENT (BOOST COEFFICIENT)
S112
DETERMINE ROTATION SPEEDS OF THE RESPECTIVE SUB-ROTORS BASED ON THE FIRST THRUST $T_1$ AND THE TORQUES $T_\Phi$, $T_\Theta$, AND $T_\Psi$
S114
DETERMINE ROTATION SPEEDS OF THE RESPECTIVE MAIN ROTORS BASED ON THE SECOND THRUST $T_2$
END

FIG. 7

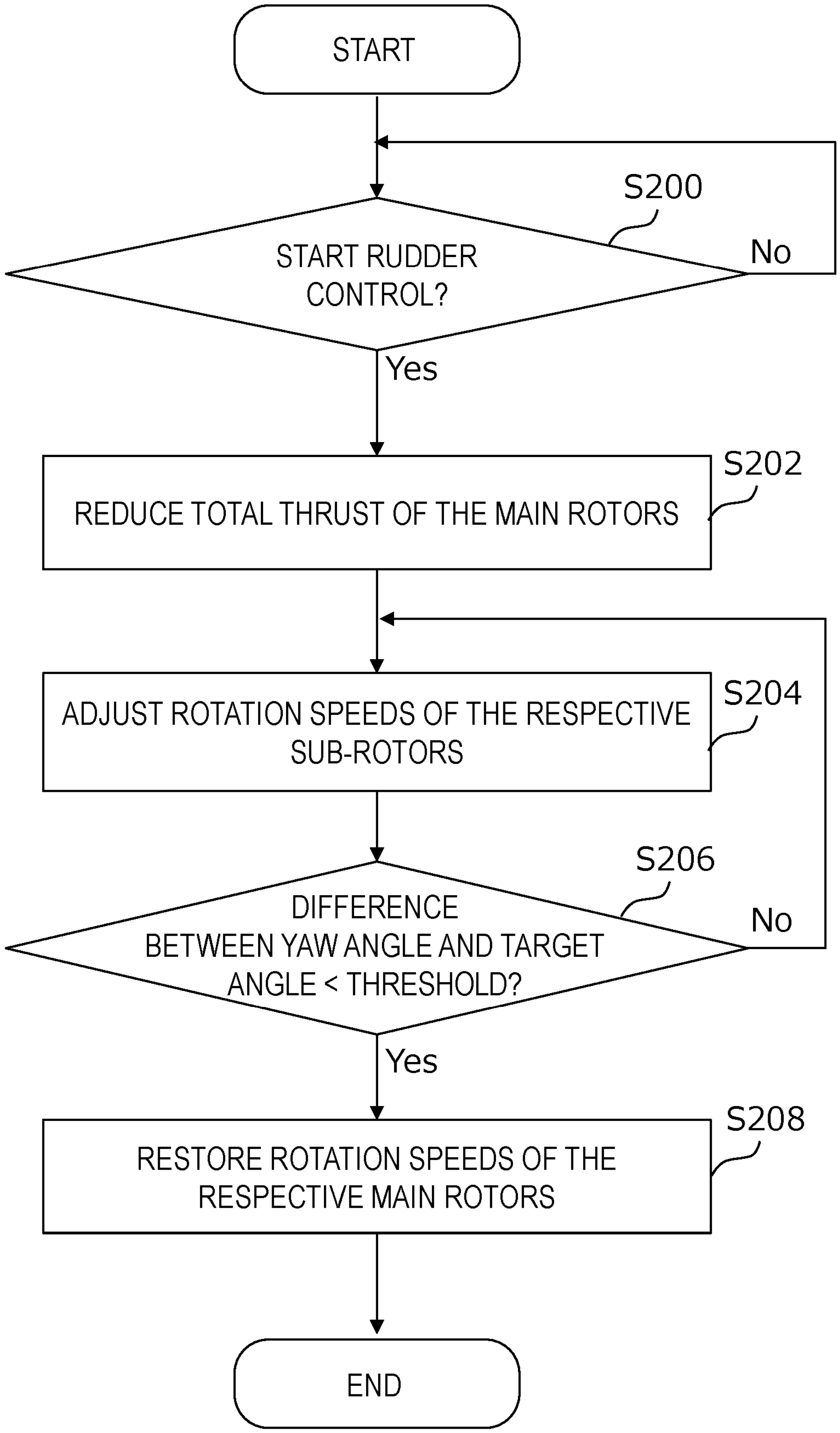
START
S200
START RUDDER CONTROL?
No
Yes
S202
REDUCE TOTAL THRUST OF THE MAIN ROTORS
S204
ADJUST ROTATION SPEEDS OF THE RESPECTIVE SUB-ROTORS
S206
DIFFERENCE BETWEEN YAW ANGLE AND TARGET ANGLE < THRESHOLD?
No
Yes
S208
RESTORE ROTATION SPEEDS OF THE RESPECTIVE MAIN ROTORS
END

*FIG. 8*

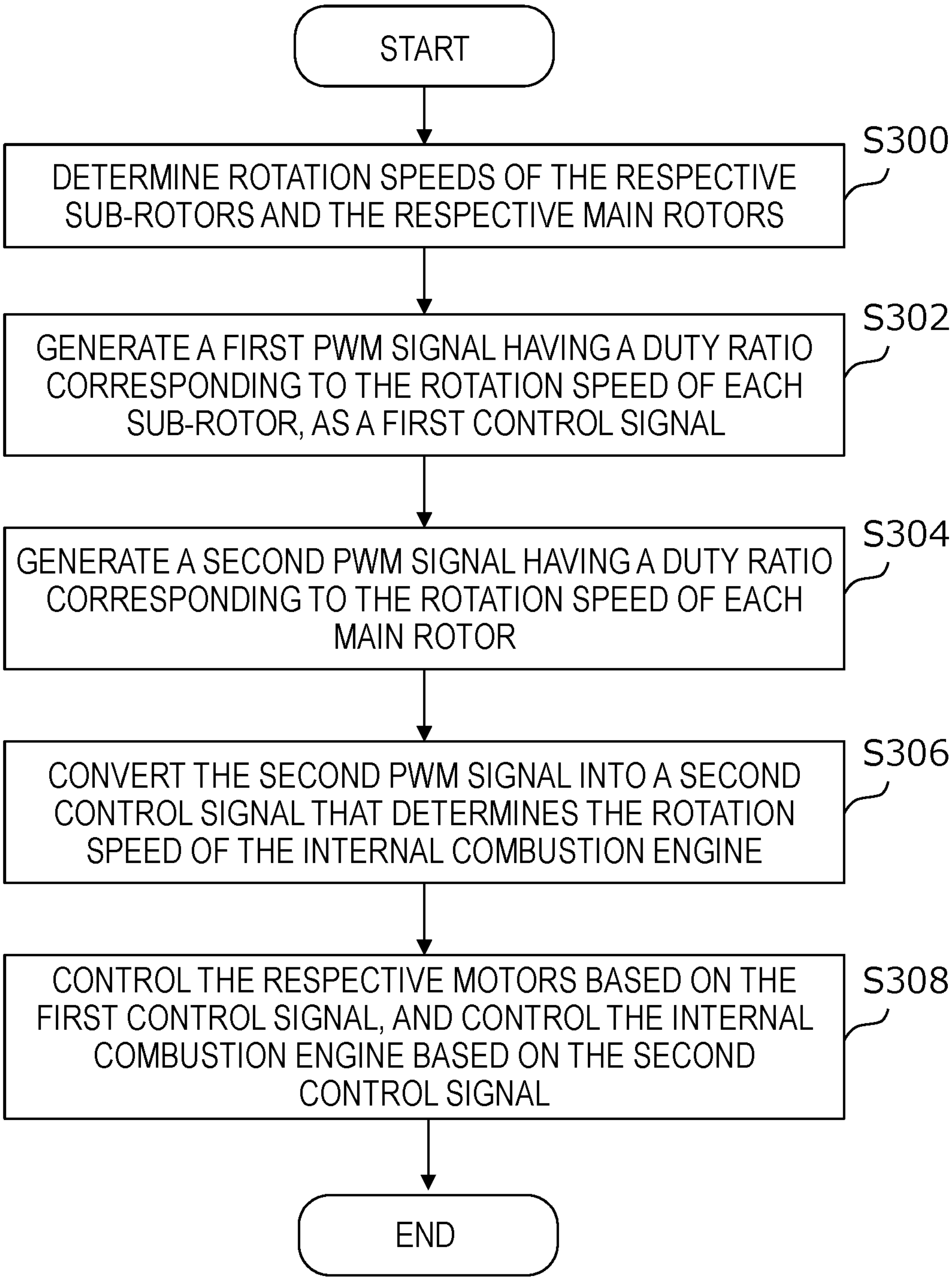
START
S300
DETERMINE ROTATION SPEEDS OF THE RESPECTIVE SUB-ROTORS AND THE RESPECTIVE MAIN ROTORS
S302
GENERATE A FIRST PWM SIGNAL HAVING A DUTY RATIO CORRESPONDING TO THE ROTATION SPEED OF EACH SUB-ROTOR, AS A FIRST CONTROL SIGNAL
S304
GENERATE A SECOND PWM SIGNAL HAVING A DUTY RATIO CORRESPONDING TO THE ROTATION SPEED OF EACH MAIN ROTOR
S306
CONVERT THE SECOND PWM SIGNAL INTO A SECOND CONTROL SIGNAL THAT DETERMINES THE ROTATION SPEED OF THE INTERNAL COMBUSTION ENGINE
S308
CONTROL THE RESPECTIVE MOTORS BASED ON THE FIRST CONTROL SIGNAL, AND CONTROL THE INTERNAL COMBUSTION ENGINE BASED ON THE SECOND CONTROL SIGNAL
END

*FIG. 9*

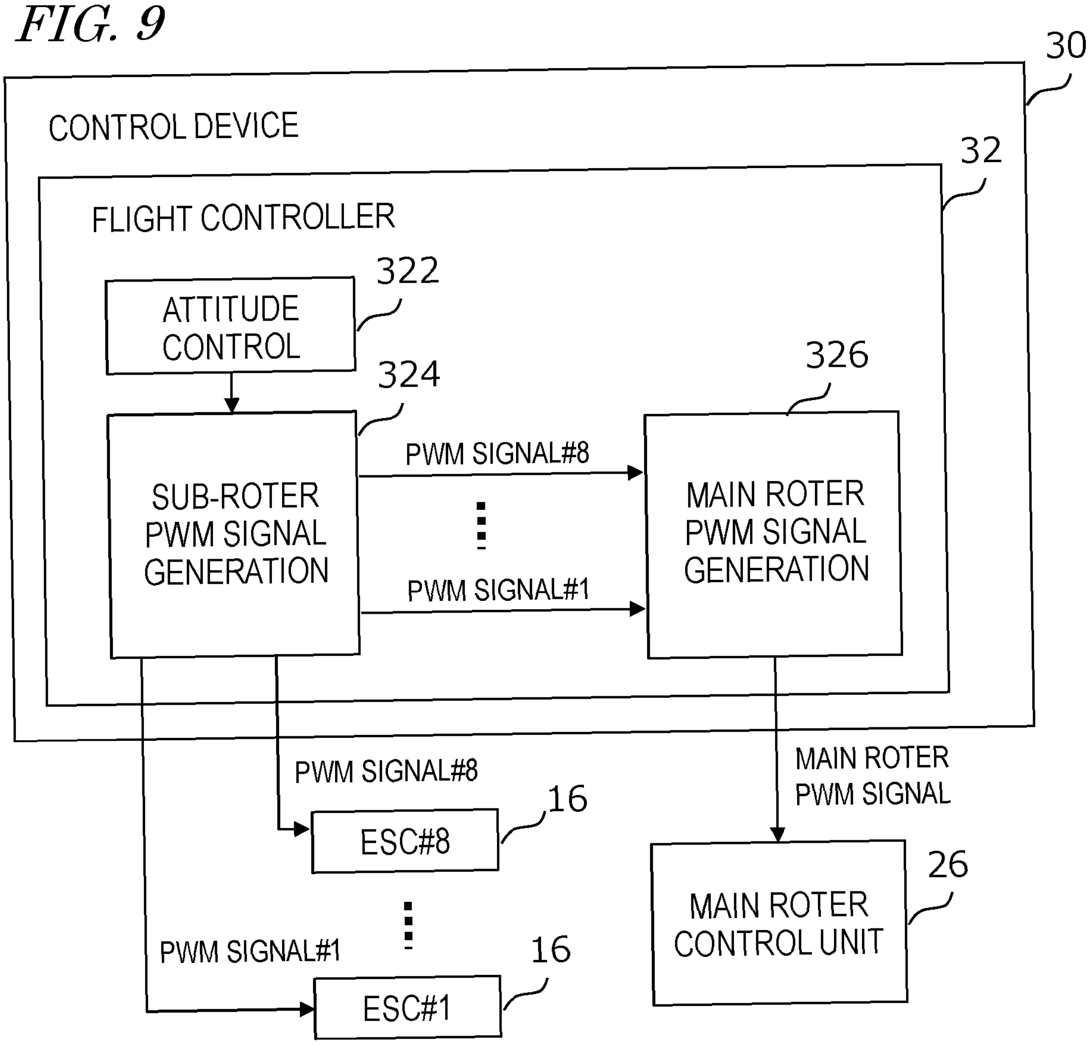
30
CONTROL DEVICE
32
FLIGHT CONTROLLER
322
ATTITUDE CONTROL
324
326
SUB-ROTER PWM SIGNAL GENERATION
PWM SIGNAL#8
PWM SIGNAL#1
MAIN ROTER PWM SIGNAL GENERATION
PWM SIGNAL#8
16
ESC#8
MAIN ROTER PWM SIGNAL
26
MAIN ROTER CONTROL UNIT
PWM SIGNAL#1
16
ESC#1

*FIG. 10*

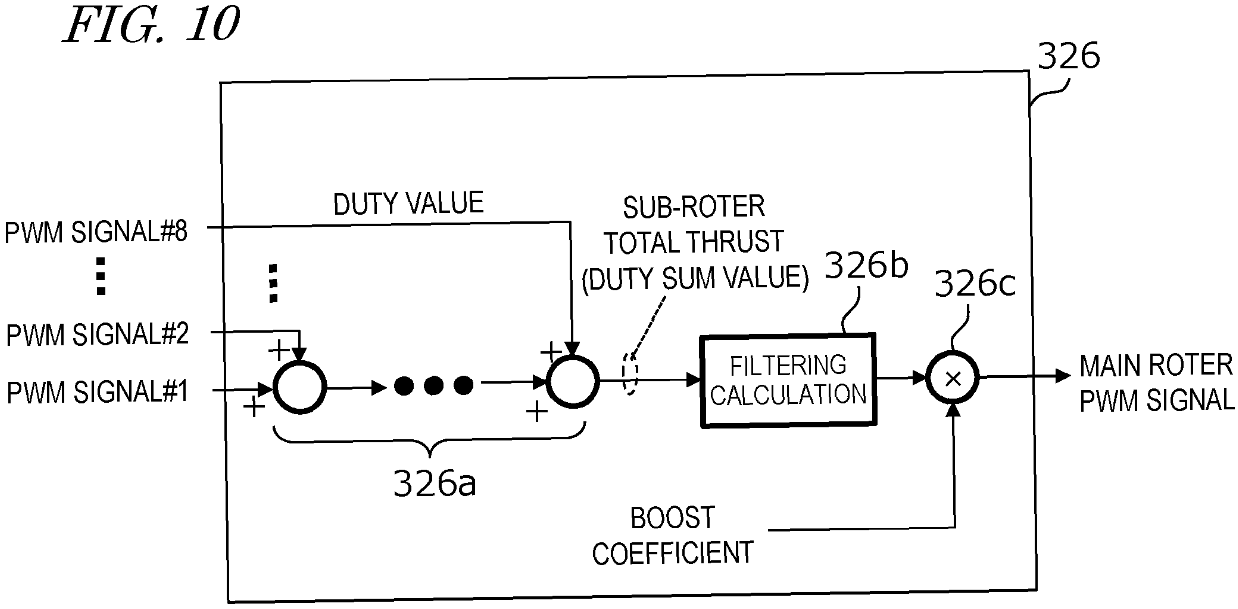
326
PWM SIGNAL#8
DUTY VALUE
SUB-ROTER TOTAL THRUST (DUTY SUM VALUE)
326b
326c
PWM SIGNAL#2
PWM SIGNAL#1
FILTERING CALCULATION
MAIN ROTER PWM SIGNAL
326a
BOOST COEFFICIENT

*FIG. 11*

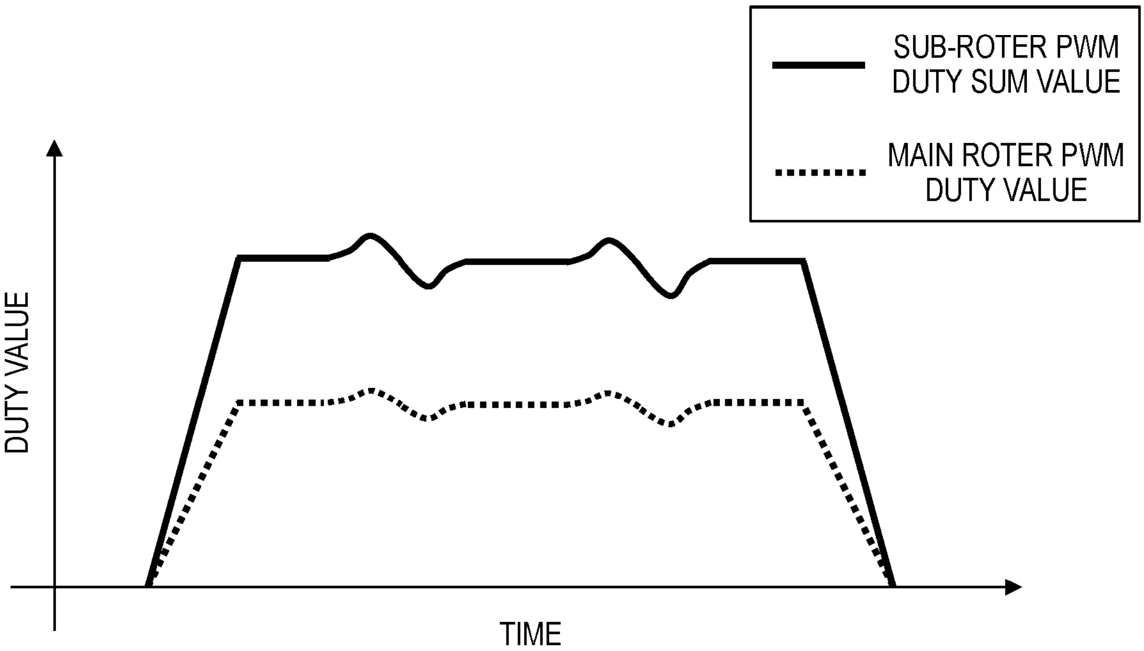
SUB-ROTER PWM DUTY SUM VALUE
MAIN ROTER PWM DUTY VALUE
DUTY VALUE
TIME

FIG. 12

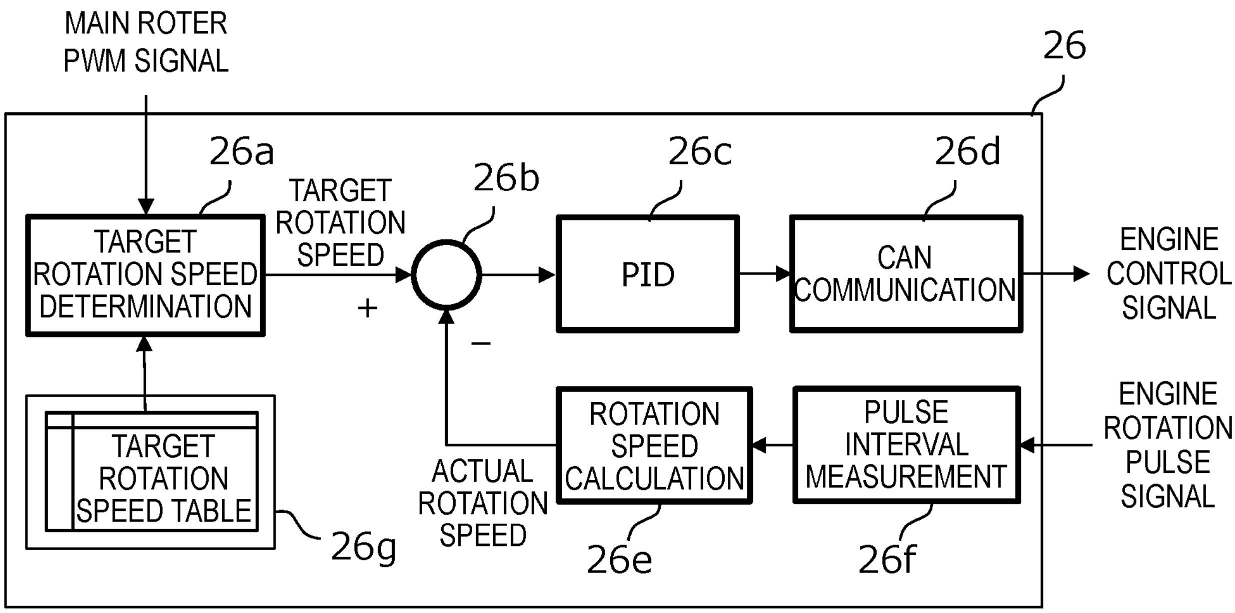
MAIN ROTER
PWM SIGNAL
26
26a
TARGET
ROTATION SPEED
DETERMINATION
TARGET
ROTATION
SPEED
+
26b
−
26c
PID
26d
CAN
COMMUNICATION
ENGINE
CONTROL
SIGNAL
TARGET
ROTATION
SPEED TABLE
26g
ACTUAL
ROTATION
SPEED
ROTATION
SPEED
CALCULATION
26e
PULSE
INTERVAL
MEASUREMENT
26f
ENGINE
ROTATION
PULSE
SIGNAL

FIG. 13

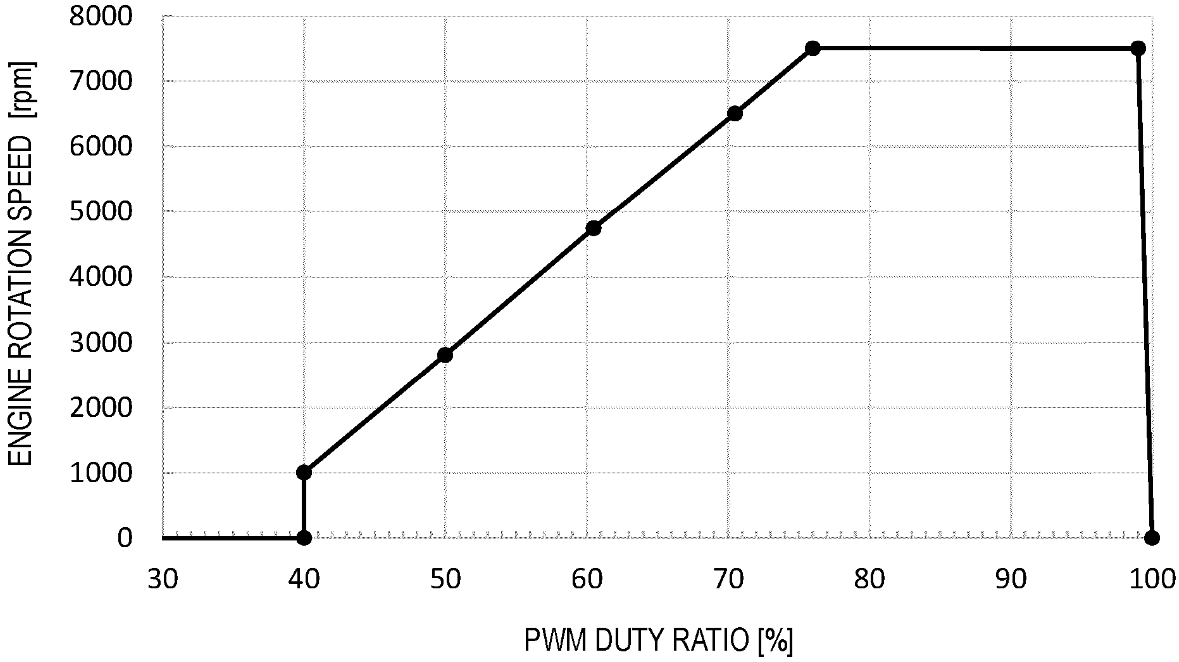
ENGINE ROTATION SPEED [rpm]
8000
7000
6000
5000
4000
3000
2000
1000
0
30
40
50
60
70
80
90
100
PWM DUTY RATIO [%]

*FIG. 14*

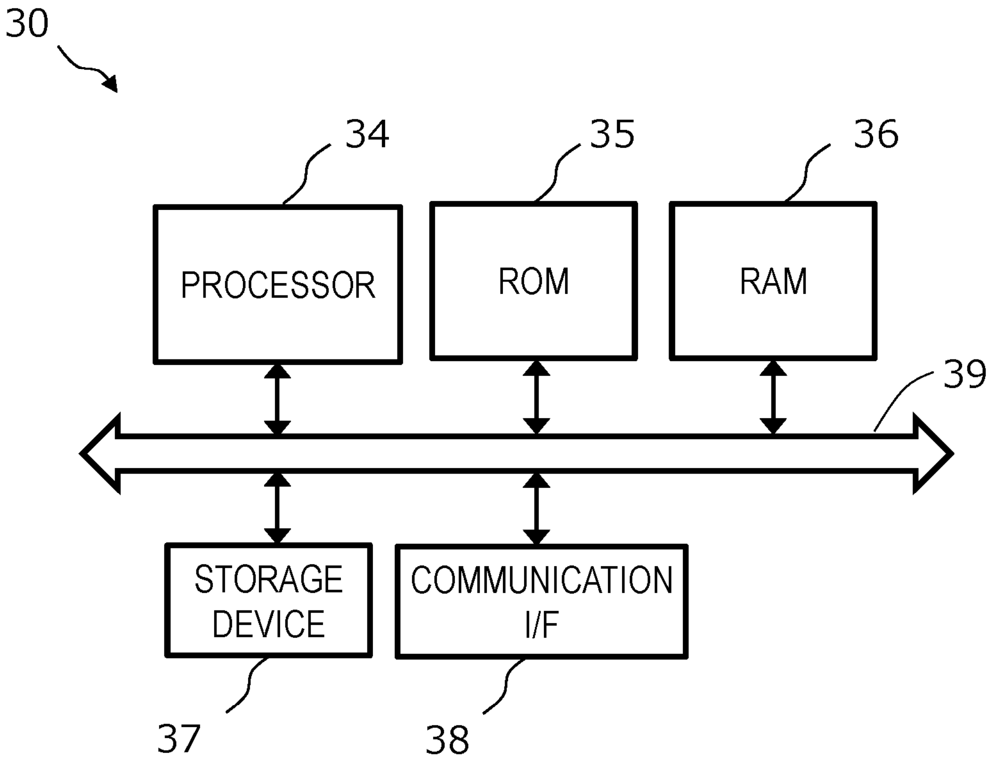
30
34
35
36
PROCESSOR
ROM
RAM
39
STORAGE DEVICE
COMMUNICATION I/F
37
38

*FIG. 15*

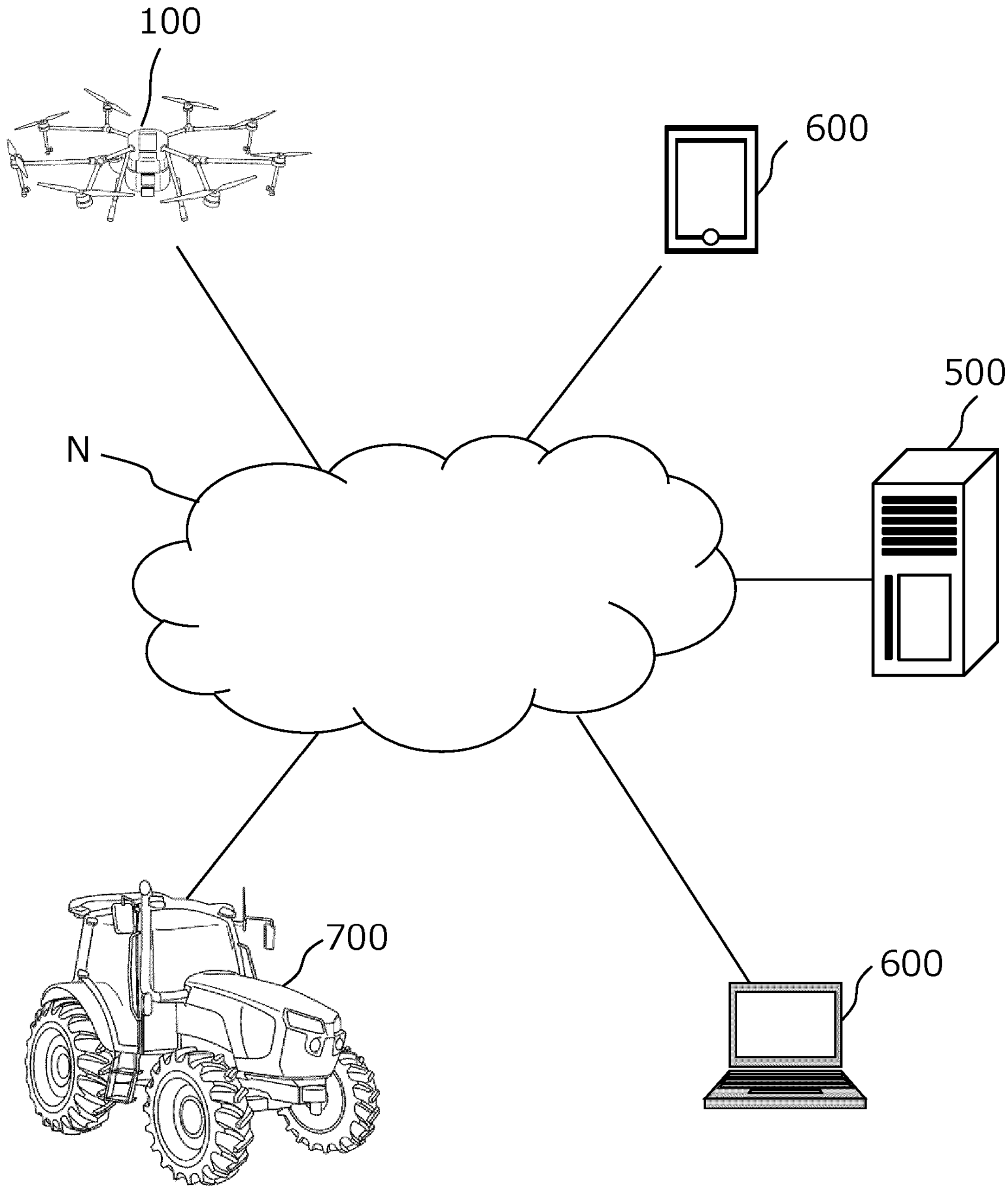

**INTERNATIONAL SEARCH REPORT**

International application No.
**PCT/JP2022/048184**

**A. CLASSIFICATION OF SUBJECT MATTER**

***B64U 10/16***(2023.01)i; *B64U 101/40*(2023.01)n
FI: B64U10/16; B64U101:40

According to International Patent Classification (IPC) or to both national classification and IPC

**B. FIELDS SEARCHED**

Minimum documentation searched (classification system followed by classification symbols)

B64U10/16; B64U101/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6954708 B1 (ISHIKAWA ENERGY RESEARCH CO., LTD.) 27 October 2021 (2021-10-27) paragraphs [0023], [0029], [0051]-[0059], [0070], fig. 1-3 | 1-10, 13 |
| Y | paragraphs [0023], [0029], [0051]-[0059], [0070], fig. 1-3 | 11-12 |
| Y | JP 7004369 B1 (ISHIKAWA ENERGY RESEARCH CO., LTD.) 21 January 2022 (2022-01-21) fig. 1, 2 | 11-12 |
| A | JP 2020-131779 A (IHI CORP.) 31 August 2020 (2020-08-31) paragraph [0025], fig. 1 | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/048184**

| Patent document cited in search report | Publication date (day/month/year) | Patent family member(s) | Publication date (day/month/year) |
|---|---|---|---|
| JP 6954708 B1 | 27 October 2021 | (Family: none) | |
| JP 7004369 B1 | 21 January 2022 | (Family: none) | |
| JP 2020-131779 A | 31 August 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022104737 A
- JP 2019059362 A
- JP 5508604 B